# EUROPÄISCHE PATENTANMELDUNG

(11) **EP 4 528 557 A1**
(43) Veröffentlichungstag der Anmeldung: **26.03.2025**
(21) Anmeldenummer: 24201381.1
(22) Anmeldetag: 19.09.2024
(51) Int. Cl.: G06F 21/10, G06F 21/12, H04L 9/32, H04L 9/06, H04L 9/08, G06F 7/58, H10F 39/00

(54) **GESICHERTES BIOS-UPDATE**

(30) Priorität: 20.09.2023 DE 102023125543; 26.09.2023 LU 505175; 26.09.2023 DE 102023126115; 26.09.2023 DE 102023126167; 26.09.2023 EP 23199793
(71) Anmelder: Elmos Semiconductor SE, 44227 Dortmund (DE)
(72) Erfinder: ROTTER, Thomas, 91077 Neunkirchen am Brand (DE); KÖLBEL, Julia, 44137 Dortmund (DE)
(74) Vertreter: Gulde & Partner

(57) **Zusammenfassung**

Die vorliegende Erfindung bezieht sich auf das Gebiet der Sicherheit von Computer-Firmware, insbesondere im Bereich des sogenannten Basic Input and Output System ("BIOS") in allgemeinen Computersystemen, wie z. B. Arbeitsplatzcomputern (Personal Computer, "PCs").

Gegenstand der vorliegenden Erfindung ist ein System zum sicheren Aktualisieren eines ausführbaren Codes, das Folgendes umfasst: ein erstes Speicherelement zum Speichern einer Code-Aktualisierung; ein zweites Speicherelement zum Speichern des ausführbaren Codes; einen Quantenzufallsgenerator; und eine erste Verarbeitungseinrichtung zur Authentifizierung und Validierung der Codeaktualisierung, wobei die erste Verarbeitungseinrichtung mit dem zweiten Speicherelement verbunden ist.

## Beschreibung

### Gegenstand der Erfindung

Die vorliegende Erfindung bezieht sich auf das Gebiet der Sicherheit von Computer-Firmware, insbesondere im Bereich des sogenannten Basic Input and Output System ("BIOS") in allgemeinen Computersystemen, wie z. B. Arbeitsplatzcomputern (Personal Computer, "PCs").

### Technologischer Hintergrund

Eines der kritischsten Elemente in einem Computersystem ist die Boot-Up-Firmware, wie z. B. das Basic Input and Output System ("BIOS"). Das BIOS ist in der Regel in einem nichtflüchtigen Speicher gespeichert und besteht aus Maschinencode, der im Allgemeinen Teil eines Betriebssystems ("OS") ist und es der zentralen Prozessoreinheit ("CPU") ermöglicht, Aufgaben wie Initialisierung, Diagnose, Laden des Betriebssystemkerns aus dem Massenspeicher und routinemäßige Eingabe-/Ausgabefunktionen ("I/O") auszuführen.

Beim Einschalten "bootet" die CPU, indem sie den Befehlscode aus dem BIOS abruft. Aufgrund seiner Beschaffenheit hat das BIOS zwei gegensätzliche Anforderungen: (1) es sollte gut geschützt sein, denn wenn es verändert oder zerstört wird, fällt das gesamte System aus, (2) es sollte leicht modifizierbar sein, damit es vor Ort für Funktionserweiterungen oder die Beseitigung von Softwarefehlern aufgerüstet werden kann.

Traditionell wird das BIOS in einem löschbaren programmierbaren Festwertspeicher ("EPROM") implementiert. Ein EPROM hat den Vorteil, dass sein Speicherinhalt innerhalb eines Schaltkreises nicht verändert werden kann. Um den Inhalt des EPROMs zu ändern, muss das Gerät zunächst gelöscht werden, indem es aus dem Sockel gezogen und über einen längeren Zeitraum ultraviolettem Licht ausgesetzt wird. In dieser Hinsicht ist das in einen EPROM implementierte BIOS resistent gegen Virenangriffe und andere elektronische Sabotageversuche. EPROM-Geräte unterstützen jedoch keine softwareinitiierten Upgrades, da diese Geräte nicht schaltungsintern programmierbar sind, was eine notwendige Eigenschaft für solche Softwareupgrades ist. Ein Softwareupgrade ermöglicht es den Kunden, das BIOS vor Ort zu aktualisieren, um kostspielige Verzögerungen und den Austausch von Teilen zu vermeiden. Aufgrund der Wichtigkeit von Upgrades vor Ort werden heute praktisch alle BIOS-Firmwares in BIOS-Flash-Speicher implementiert. Da BIOS-Flash-Speicher jedoch vor Ort modifiziert werden können, sind sie anfällig für Virenangriffe, die bei sensiblen Anwendungen wie Finanztransaktionen verheerende Folgen haben können.

Ohne Sicherheitsschutz sind herkömmliche Computerarchitekturen mit BIOS-Flash-Speicher anfällig für viele Arten von Angriffen, wie z. B. genannte Virenangriffe. Bei einem typischen Virenangriff führt der Virencode eine Codesequenz aus, um den BIOS-Flash-Speicher zu verändern. Der ungeschützte Code im BIOS-Flash-Speicher wird beschädigt und die zerstörerischen Auswirkungen können sofort wirksam werden, wenn das System das nächste Mal hochgefahren wird oder wenn bestimmte Bedingungen oder Ereignisse eingetreten sind. Der infizierte Code kann sich auch auf andere Bereiche des BIOS-Codes oder den Kernel des Betriebssystems ausbreiten. Da das BIOS der erste Programmcode ist, der ausgeführt wird, wenn das Computersystem "hochgefahren" wird, und zwar noch vor jeglicher System- oder Netzwerkvirenscan-Software, ist die Erkennung und Beseitigung eines BIOS-basierten Virus äußerst schwierig. Ein BIOS-basierter Virus kann seine Spuren vor einer solchen Scansoftware "verbergen" und wird dadurch praktisch unsichtbar.

Das Hauptaugenmerk der vorliegenden Erfindung liegt daher darauf, die Beschädigung des BIOS durch einen Computervirus zu verhindern. Dies wird dadurch erreicht, dass ein Authentifizierungs- und Validierungsverfahren vorgeschrieben wird, bevor der Inhalt des BIOS-Flash-Speichers geändert wird.

Der in dieser Erfindung verfolgte Ansatz baut auf dem Konzept der BIOS-Authentifizierung auf, indem die BIOS-Flash-Speicher in vorhandene Hardware mit Authentifizierungsfunktion, wie z. B. einen kryptografischen Coprozessor, integriert werden. Da der kryptografische Coprozessor sowohl das BIOS speichert als auch die Authentifizierung von BIOS-Updates durchsetzt, hat ein Angreifer keine Möglichkeit, den BIOS-Inhalt zu verändern oder zu beschädigen.

Die DE 10 2022 125 568 A1 betrifft eine Datenverarbeitungsvorrichtung umfassend eine integrierte Schaltung, die einen Datenprozessor und einen nichtflüchtigen Speicher enthält, der mindestens einen Sicherheitscode speichert. Ein erster Speicher außerhalb der integrierten Schaltung speichert Daten, wobei die Daten in einem ersten Format kryptographisch geschützt sind. Ein zweiter Speicher außerhalb des integrierten Schaltkreises dient zur Speicherung von Daten. Die Vorrichtung ist so eingerichtet, dass sie Daten vom ersten Speicher über die integrierte Schaltung zum zweiten Speicher überträgt, damit der Datenprozessor vom zweiten Speicher aus darauf zugreifen kann. Die integrierte Schaltung ist so angeordnet, dass sie während der Übertragung die aus dem ersten Speicher gelesenen Daten mit Hilfe eines in dem nichtflüchtigen Speicher gespeicherten Sicherheitscodes validiert. Wenn die Daten validiert sind, wird ein kryptografischer Schutz in einem zweiten Format auf die validierten Daten angewendet, wobei ein in dem nichtflüchtigen Speicher gespeicherter Sicherheitscode verwendet wird. Die geschützten Daten werden in dem zweiten Speicher in dem zweiten Format gespeichert. Die Offenbarung richtet sich auf einen Rechner, der zumindest einen quantenprozessbasierenden mikrointegierbaren Generator für echte Zufallszahlen als Zufallszahlengenerator mit hoher Zufallsbitausgangsrate insbesondere für die Verschlüsselung umfasst. Der DE 10 2022 125 569 A1, DE 10 2022 125 570 , DE 10 2022 125 571 A1A1, DE 10 2022 125 572 A1, DE 10 2022 125 573 A1 sowie der unveröffentlichten Anmeldung mit der Anmeldenummer DE 10 2022 125 574.3 können ebenfalls entsprechende Vorrichtungen entnommen werden.

### Beschreibung der Erfindung

Die vorliegende Erfindung beschreibt ein System und ein Verfahren zur sicheren Aktualisierung eines ausführbaren Codes. Das System umfasst ein erstes Speicherelement zum Speichern einer Code-Aktualisierung, ein zweites Speicherelement zum Speichern des zu aktualisierenden ausführbaren Codes, einen Identifikationscode zum Identifizieren des ersten Speicherelements und der Code-Aktualisierung und einen Sicherheitsprozessor (z. B. einen kryptografischen Coprozessor). Der Sicherheitsprozessor ist mit dem zweiten Speicherelement gekoppelt, um das erste Speicherelement und die Codeaktualisierung anhand der Gerätekennung zu authentifizieren und zu validieren.

Ein erster Aspekt der vorliegenden Erfindung betrifft ein System zum sicheren Aktualisieren eines ausführbaren Codes, das Folgende umfassend: ein erstes Speicherelement zum Speichern einer Codeaktualisierung; ein zweites Speicherelement zum Speichern des ausführbaren Codes; einen Quantenzufallsgenerator; und eine erste Verarbeitungseinrichtung zur Authentifizierung und Validierung der Codeaktualisierung, wobei die erste Verarbeitungseinrichtung mit dem zweiten Speicherelement verbunden ist. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Der ausführbare Code kann ein Basic Input and Output System (BIOS) und/oder heruntergeladenen Programmcode umfassen.

Das zweite Speicherelement kann eine modifizierbare nichtflüchtige Speichervorrichtung umfassen.

Das erste Verarbeitungsmittel kann mindestens ein digitales Zertifikat zur Authentifizierung der Codeaktualisierung und/oder eine digitale Signatur zur Validierung der Codeaktualisierung verwenden.

Die Authentifizierung kann eine Feststellung umfassen, dass die Aktualisierungsinformationen von einer vorgegebenen Quelle stammen.

Die vorgegebene Quelle kann einen ausgewählten BIOS-Anbieter und/oder Software-Anbieter umfassen.

Das erste Verarbeitungsmittel kann den ausführbaren Code durch die Codeaktualisierung ersetzt, wenn die Codeaktualisierung authentifiziert und validiert wurde.

Die Codeaktualisierung kann verschlüsselt sein und zur Bereitstellung des ausführbaren Codes entschlüsselt werden.

Die erste Verarbeitungseinrichtung kann dazu eingerichtet sein, zu bestimmen, ob die Codeaktualisierung in das erste Speicherelement geladen werden soll.

Die erste Verarbeitungseinrichtung kann einen Sicherheitsprozessor umfassen.

Die erste Verarbeitungseinrichtung kann auf einer herausnehmbaren Karte angeordnet sein.

Das erfindungsgemäße System kann weiterhin einen Host-Prozessor, der erste Verarbeitungseinrichtung kommuniziert, um den ausführbaren Code auszuführen, umfassen.

Das erfindungsgemäße System kann weiterhin eine zweite Verarbeitungseinrichtung, die mit der ersten Verarbeitungseinrichtung kommuniziert, um den ausführbaren Code auszuführen, umfassen.

Ein anderer Aspekt der vorliegenden Erfindung betrifft ein Verfahren zum sicheren Aktualisieren eines ausführbaren Codes, wobei das Verfahren umfasst: Bereitstellen einer erfindungsgemäßen Vorrichtung; Konfigurieren des ersten Speicherelements zur Aufnahme mindestens eines Zertifikats; Authentifizieren der Codeaktualisierung auf der Grundlage des mindestens einen digitalen Zertifikats durch die erste Verarbeitungseinrichtung; und Aktualisieren des ausführbaren Codes mit der Codeaktualisierung, wenn die Codeaktualisierung authentifiziert ist.

Das Verfahren kann vor der Aktualisierung ferner einen Schritt der Validierung der Codeaktualisierung umfassen.

Ein noch weiterer Aspekt der vorliegenden Erfindung betrifft ein System zum sicheren Aktualisieren eines ausführbaren Codes, das das Folgende umfassen kann: ein erstes Speichermittel zum Speichern einer Code-Aktualisierung; ein zweits Speichermittel zum Speichern des ausführbaren Codes; einen Quantenzufallsgenerator; und eine erste Verarbeitungseinrichtung zur Authentifizierung und Validierung der Codeaktualisierung, wobei die erste Verarbeitungseinrichtung mit der zweiten Speichereinrichtung verbunden ist. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise enthält der ausführbare Code ein Basic Input and Output System (BIOS) und/oder heruntergeladenen Programmcode. Vorzugsweise umfasst das erste Speichermittel ein Massenspeichergerät. Vorzugsweise umfasst das zweite Speichermittel eine modifizierbare nichtflüchtige Speichervorrichtung. Vorzugsweise umfasst die erste Verarbeitungseinrichtung einen kryptographischen Prozessor. Vorzugsweise verwendet das erste Verarbeitungsmittel mindestens ein digitales Zertifikat zur Authentifizierung der Codeaktualisierung und eine digitale Signatur zur Validierung der Codeaktualisierung. Vorzugsweise wird der ausführbare Code verschlüsselt, um einen verschlüsselten Code zu erzeugen. Vorzugsweise umfasst das System weiterhin eine zweite Verarbeitungseinrichtung, die mit der ersten Verarbeitungseinrichtung kommuniziert, um den ausführbaren Code auszuführen. Vorzugsweise wird der verschlüsselte Code entschlüsselt, um einen entschlüsselten Code zu erzeugen.

Ein noch weiterer Aspekt der vorliegenden Erfindung betrifft ein System zum sicheren Aktualisieren eines ausführbaren Codes, das Folgendes umfassen kann: ein erstes Speicherelement, das eine Code-Aktualisierung enthält; ein zweites Speicherelement, das den ausführbaren Code enthält; einen Quantenzufallsgenerator; und einen Sicherheitsprozessor, der mit dem zweiten Speicherelement gekoppelt ist, wobei der Sicherheitsprozessor zur Authentifizierung der Codeaktualisierung auf der Grundlage mindestens eines Zertifikats und zur Validierung der Codeaktualisierung auf der Grundlage einer digitalen Signatur dient. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise enthält der ausführbare Code ein Basic Input and Output System (BIOS) und/oder heruntergeladenen Programmcode. Vorzugsweise ist die digitale Signatur Teil der Code-Aktualisierung. Vorzugsweise umfasst das zweite Speicherelement eine modifizierbare nichtflüchtige Speichereinrichtung. Vorzugsweise ist der Sicherheitsprozessor auf einer herausnehmbaren Karte integriert. Vorzugsweise enthält das mindestens eine Zertifikat eine verschlüsselte Version eines öffentlichen Schlüssels eines Herstellers des BIOS und/oder des heruntergeladenen Softwarecodes. Vorzugsweise ist der ausführbare Code in einem verschlüsselten Format enthalten. Vorzugsweise kann das System ferner umfassen: einen Host-Prozessor, der mit dem Sicherheitsprozessor kommuniziert, um den ausführbaren Code auszuführen. Vorzugsweise wird der verschlüsselte Code vor der Ausführung entschlüsselt.

Ein noch weiterer Aspekt der vorliegenden Erfindung betrifft ein Verfahren zum sicheren Aktualisieren eines ausführbaren Codes, wobei das Verfahren umfassen kann: Bereitstellung eines ersten Speicherelements zum Speichern einer Code-Aktualisierung; Bereitstellung eines zweiten Speicherelements zum Speichern des ausführbaren Codes; Konfigurieren des ersten Speicherelements zur Aufnahme mindestens eines Zertifikats; Bereitstellung eines Sicherheitsprozessors für den Zugriff auf das zweite Speicherelement; Authentifizierung der Code-Aktualisierung auf der Grundlage des mindestens einen, digitalen Zertifikats durch den Sicherheitsprozessor; und Aktualisierung des ausführbaren Codes mit dem Code-Update, wenn das Code-Update authentifiziert ist. Das Verfahren nutzt vorzugsweise einen Quantenzufallsgenerator zur B wobei das Verfahren vor dem Aktualisierungsschritt ferner einen Schritt der Validierung der Codeaktualisierung umfasst.

Vorzugsweise enthält der ausführbare Code ein Basic Input and Output System (BIOS) und/oder heruntergeladenen Programmcode. Vorzugsweise liegt der im zweiten Speicherelement bereitgestellte ausführbare Code in einem verschlüsselten Format vor. Vorzugsweise kann das Verfahren weiterhin umfassen: Bereitstellung eines Host-Prozessors, der mit dem Sicherheitsprozessor kommuniziert, um den ausführbaren Code auszuführen.

Ein noch weiterer Aspekt der vorliegenden Erfindung betrifft ein System, das das Folgende umfassen kann: ein erstes Speicherelement, das eine Code-Aktualisierung enthält; ein zweites Speicherelement, das einen ausführbaren Code enthält; einen Quantenzufallsgenerator; und einen Sicherheitsprozessor, der mit dem zweiten Speicherelement gekoppelt ist, wobei der Sicherheitsprozessor zur Authentifizierung der Codeaktualisierung auf der Grundlage mindestens eines Zertifikats dient. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise enthält der ausführbare Code ein Basic Input and Output System (BIOS) und/oder heruntergeladenen Programmcode. Vorzugsweise enthält das mindestens eine Zertifikat eine verschlüsselte Version eines öffentlichen Schlüssels eines Herstellers des BIOS und/oder Software-Herstellers. Vorzugsweise umfasst das zweite Speicherelement eine modifizierbare nichtflüchtige Speichereinrichtung. Vorzugsweise validiert der Sicherheitsprozessor die Codeaktualisierung durch eine digitale Signatur, die Teil der Codeaktualisierung ist. Vorzugsweise lädt der Sicherheitsprozessor die Codeaktualisierung in das zweite Speicherelement, nachdem die Codeaktualisierung authentifiziert und validiert worden ist. Vorzugsweise ist der Sicherheitsprozessor auf einer herausnehmbaren Karte integriert. Vorzugsweise liegt der ausführbare Code in einem verschlüsselten Format vor, wenn er in dem zweiten Speicherelement enthalten ist. Vorzugsweise kann das System weiterhin einen Host-Prozessor umfassen, der mit dem Sicherheitsprozessor kommuniziert, um den ausführbaren Code auszuführen.

Ein noch weiterer Aspekt der vorliegenden Erfindung betrifft ein System, das Folgendes umfassen kann: ein erstes Speicherelement, das eine Code-Aktualisierung enthält; ein zweites Speicherelement, das einen ausführbaren Code enthält; einen Quantenzufallsgenerator; und einen Sicherheitsprozessor, der mit dem zweiten Speicherelement verbunden ist, wobei der Sicherheitsprozessor die Codeaktualisierung validiert. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise ersetzt der Sicherheitsprozessor den ausführbaren Code durch die Codeaktualisierung, wenn die Codeaktualisierung gültig ist. Vorzugsweise enthält der ausführbare Code ein Basic Input and Output System (BIOS) und/oder heruntergeladenen Programmcode. Vorzugsweise ist die digitale Signatur Teil des Codeaktualisierung. Vorzugsweise umfasst das zweite Speicherelement eine modifizierbare nichtflüchtige Speichereinrichtung. Vorzugsweise authentifiziert der Sicherheitsprozessor die Code-Aktualisierung mit mindestens einem Zertifikat, das einen öffentlichen Schlüssel eines BIOS-Anbieters und/oder Software-Anbieters enthält.

Ein noch weiterer Aspekt der vorliegenden Erfindung betrifft ein System, das Folgendes umfassen kann: ein erstes Speicherelement, das Informationen enthält; ein zweites Speicherelement, das Aktualisierungsinformationen enthält; einen Quantenzufallsgenerator; und einen Sicherheitsprozessor, der mit dem ersten Speicherelement verbunden ist, wobei der Sicherheitsprozessor die Aktualisierungsinformationen validiert, um zu bestimmen, ob die Aktualisierungsinformationen anschließend in das erste Speicherelement geladen werden sollen. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise kann der Sicherheitsprozessor ferner die Aktualisierungsinformationen authentifizieren, um festzustellen, dass die Aktualisierungsinformationen von einer vorgegebenen Quelle stammen. Vorzugsweise kann die Informationen einen ausführbaren Code enthalten. Vorzugsweise enthält der ausführbare Code ein Basic Input and Output System (BIOS) und/oder heruntergeladenen Programmcode. Vorzugsweise enthält die vorbestimmte Quelle einen ausgewählten BIOS-Anbieter und/oder Software-Anbieter.

Ein Quantenzufallsgenerator kann eine Entropiequelle umfassen. Es ist bevorzugt, dass die Entropiequelle monolithisch in einem Halbleitersubstrat mit einer Oberfläche ausgeführt ist. Die Entropiequelle kann eine Photonenquelle umfassen, die dazu eingerichtet ist, bei einer entsprechenden Bestromung Photonen (bevorzugt Einzelphotonen) auszusenden. Weiterhin kann die Entropiequelle einen Einzelphotonendetektor umfassen, der dazu eingerichtet ist, die Photonen der Photonenquelle zu detektieren und ein Entropiequellenausgangssignal zu erzeugen. Vorzugsweise ist die Photonenquelle zwischen der Oberfläche eines Halbleitersubstrats in dem die Photonenquelle ausgebildet ist (es kann sich um das gleiche Halbleitersubstrat handeln, in dem die Entropiequelle monolithisch ausgebildet ist) und dem Einzelphotonendetektor angeordnet. Alternativ kann auch der Einzelphotonendetektor zwischen der Oberfläche eines Halbleitersubstrats in dem die Photonenquelle ausgebildet ist (es kann sich um das gleiche Halbleitersubstrat handeln, in dem die Entropiequelle monolithisch ausgebildet ist) und der Einzelphotonenquelle angeordnet sein.

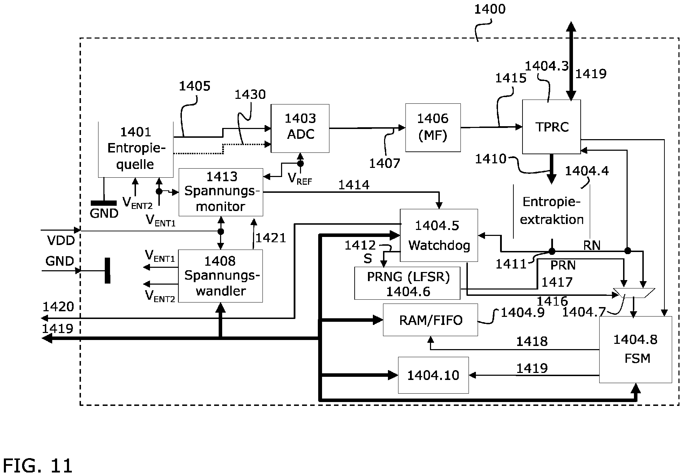

Besonders bevorzugt ist, dass die Photonenquelle und der Einzelphotonendetektor vertikal übereinander angeordnet sind, d. h. beispielsweise wenn diese als hybride Strukturen mit jeweils eigenen Substraten miteinander kombiniert werden oder bei einer monolithisch in einem Halbleitersubstrat integrierten Entropiequelle eine vertikale Stapelstruktur ausbilden. Der Quantenzufallsgenerator kann ein Mittel zur Erzeugung einer oder mehrerer Quantenzufallszahlen in Abhängigkeit von dem Entropiequellenausgangssignal aufweisen. Eine Quantenzufallszahl kann beispielsweise ein einzelnes Quantenzufallsbit oder ein Quantenzufallsdatenwort aus mehreren Quantenzufallsbits umfassen. Insbesondere kann es sich bei dem Quantenzufallsgenerator um einen beispielhaft in FIG. 11 beschriebenen Quantenzufallsgenerator handeln, wobei die Entropiequelle vorzugsweise wie obenstehend beschrieben ausgebildet ist.

Insbesondere kann der Quantenzufallsgenerator als Entropiequelle daher bevorzugt einen integrierten Quanten-Zufallszahlengenerator (engl. "integrated Quantum Random Number Generator, iQRNG"), insbesondere einen monolithisch in einem gemeinsamen Halbleitersubstrat im gleichen Materialsystem skalierbar und vollständig integriert aufgebauten photonischen QRNG bestehend aus einer Photonenquelle und einen unmittelbar an die Quelle gekoppelten Detektor für einzelne Photonen in einer besonders kompakten und angriffssicheren Ausführung auf einer für vielfältige Anwendungen offenen Technologieplattform zur Halbleiterstrukturierung umfassen.

Hierbei gilt es zu beachten, dass in vielen Bereichen von Wissenschaft und Technik zufällige Ereignisse und die Bestimmung von Wahrscheinlichkeiten eine besonders herausragende Rolle spielen. Beispielsweise basieren Monte-Carlo-Simulationen und sichere Verschlüsselungsverfahren in hohem Maße auf der Bereitstellung von Zufallszahlen. Man unterscheidet dabei im Allgemeinen zwischen den sogenannten Pseudo-Zufallszahlen und echten Zufallszahlen. Während erstere mittels deterministischer Formeln durch Pseudo-Zufallszahlengeneratoren (engl. "Pseudo Random Number Generators, PRNGs") erzeugt werden, also nicht absolut zufällig sind, basieren nicht-deterministische Zufallszahlengeneratoren zur Bereitstellung echter Zufallszahlen (engl. "True Random Number Generators, TRNGs") im Allgemeinen auf real unvorhersehbaren Prozessen wie einem thermischen oder atmosphärischen Rauschen und nicht auf künstlich generierten Mustern deterministischer Algorithmen. Allerdings können auch die Ergebnisse von solchen auf äußeren Parametern basierenden nicht-deterministischen Zufallszahlengeneratoren abhängig vom zugrundeliegenden Zufallselement aufgrund von schwachen Korrelationen beispielsweise noch immer geringfügig zu höheren oder zu geraden Zahlen tendieren und somit zumindest eine teilweise Vorhersagbarkeit der so generierten Zufallszahlen ermöglichen.

Die sogenannten Quanten-Zufallszahlengeneratoren (engl. "Quantum Random Number Generators, QRNGs") als spezielle Untergruppe der TRNGs hingegen basieren auf fundamentalen Quantenprozessen zur Zufallszahlenerzeugung und sind daher zumindest theoretisch nicht an andere die Statistik beeinflussende äußere Faktoren und Effekte gekoppelt. Quanten-Zufallszahlengeneratoren stellen somit die z. Z. beste verfügbare Quelle für echte Zufallszahlen dar. Aktuelle digitale QNRGs können dabei Entropieraten (d. h. eine Folge von Bitwerten mit maximaler Zufälligkeit bzw. Entropie) von bis zu einigen hundert Mbps liefern. Die erzeugten Zufallszahlen werden sowohl bei klassischen Verschlüsselungsverfahren als auch bei einer Vielzahl von Verfahren der Quanteninformatik und Quantenkryptografie zur Gewährleistung eines sicheren Schlüsselaustauschs benötigt (engl. "Secure/Quantum Key Distribution, SKD/QKD"). Zur Generierung sicherer Schlüssel in der Kryptographie sind daher nicht-manipulierbare und schnelle QRNGs unbedingt erforderlich.

Eine Vielzahl von QRNGs wird aufgrund von deren besonders einfacher Realisierbarkeit mit Hilfe zufälliger Eigenschaften von Photonen als photonische QRNGs realisiert. Ein einfaches Konzept für die Erzeugung von Zufallszahlen ist dabei das Verhalten eines Photons, dass an einen semitransparenten Strahlteiler unabhängig von anderen Photonen entweder reflektiert oder transmittiert wird. Ein anderer Ansatz ist die Nutzung der zufälligen Ankunftszeiten von Photonen auf einem Einzelphotonendetektor. Dieser auf einer intrinsischen, prinzipiell nicht deterministisch berechenbaren Photonenstatistik der Photonen einer zugehörigen Photonenquelle basierende Verteilungseffekt kann ebenfalls zur Bereitstellung echter Zufallszahlen mit hoher Entropie genutzt werden. Die Ankunftszeiten von Photonen auf einem Einzelphotonendetektor weisen im Allgemeinen eine Exponential-Verteilung auf.

Typischerweise wird in einem Einzelphotonendetektor (engl. "Single Photon Detector, SPD") zunächst durch ein einzelnes einfallendes Photon ein Detektorimpuls erzeugt, welcher in einem Zeit-zu-Digital-Wandler (engl. "Time-to-Digital Converter, TDC") in eine mit einem Zeitstempel versehende digitale Repräsentation des Detektionsereignisses umgewandelt und entsprechend weiterverarbeitet werden kann. Als Photonen- bzw. Entropiequelle in QRNGs werden dabei zumeist stark auf das Einzelphotonenniveau abgeschwächte Laserdioden (engl. "Laser Diodes, LD") oder einfache lichtemittierende Dioden (engl. "Light Emitting Diodes, LEDs") genutzt, deren emittierte Photonen anschließend über einen oder mehrere besonders empfindliche Einzelphotonen-Lawinendioden (engl. "Single Photon Avalanche Diodes, SPADs") als SPD zeitlich aufgelöst erfasst werden können. Solche zeitgleich nur einzelne oder nur einige wenige Photonen bereitstellende Photonenquellen werden im Rahmen dieser Anmeldung auch als Einzelphotonenquellen (engl. "Single Photon Source, SPS") bezeichnet. Es muss sich dabei jedoch nicht um echte Einzelphotonenemitter, beispielsweise auf Basis eines einzelnen isolierten Zweiniveausystems, handeln.

Bei SPADs handelt es sich um eine Art Photodetektor ähnlich den Photodioden (engl. "Photo Diodes, PDs") und Avalanche-Photodioden (engl. "Avalanche Photo Diodes, APDs"), jedoch mit einer demgegenüber deutlich erhöhten Sensitivität. Die SPADs können digital - auch innerhalb einer gemeinsamen integrierten Schaltung - ausgelesen und ausgewertet werden. Wird eine solche integrierte Detektorschaltung durch einzelne Photonen angeregt, so wird in dem sensorisch aktiven Bereich (Absorptionsgebiet) pro anregendem Photon primär jeweils nur ein Elektron-Loch-Paar generiert, wobei die angeregten Elektronen durch elektrische Felder zur Kathode und die angeregten Löcher zur Anode abgezogen werden. Dabei driften die Ladungsträger bei einer SPAD durch ein sogenanntes Lawinengebiet, innerhalb dessen durch eine verstärkte Stoßionisation eine Ladungslawine erzeugt wird. Es handelt sich somit um hochgradig sensitive Photonen-Empfänger-Elemente, welche bei Aktivierung eine hohe Ladungsmenge (ca. 10⁵ - 10⁶ Elektronen) mit hoher zeitlicher Auflösung bereitstellen können.

Eine SPAD wird typischerweise im Geiger-Modus oberhalb seiner Durchbruchspannung betrieben, wobei ein einzelnes Photon über die erzeugte Ladungslawine detektiert und anschließend als Einzelereignis registriert wird. Zur Verringerung der während der Registrierung auftretenden Totzeit kann unmittelbar nach dem Einsetzen der Lawinenausbildung eine aktive oder passive Unterdrückung bzw. Quenching der weiteren Ladungsträgerverstärkung erfolgen. Die integrierte Schaltung kann neben der SPAD auch ein sogenanntes Einzelphotonenzählwerk bzw. einen Einzelphotonenzähler (engl. "Single-Photon Counter, SPC") umfassen, hierbei erfolgt im Allgemeinen anstatt einer direkten Ausgabe eines einzelnen Detektorimpulses eine unmittelbare statistische Auswertung der zeitlichen Verteilung der einzelnen detektierten Einzelphotonenereignisse.

Der Begriff Quanten-Zufallszahlengenerator (QRNG) ist im Rahmen dieser Anmeldung vor allem als abstrakte Definition im Sinne einer Anordnung zur Bereitstellung von zahlenmäßig erfassbaren quantisierten Zufallsereignissen zu verstehen. Ein Quanten-Zufallszahlengenerator umfasst dabei stets eine sogenannte Entropiequelle, also ein diese Zufallsereignisse tatsächlich bereitstellendes Element (z. B. eine SPS alleine oder in Kombination mit einem SPD). Der Begriff Quanten-Zufallszahlengenerator ist jedoch nicht auf die Entropiequelle beschränkt, sondern kann beispielsweise auch die Umgebung und die strukturelle Anordnung der Entropiequelle in einer Vorrichtung oder einem Substrat umfassen. Im Allgemeinen werden unter diesem Begriff jedoch auch entsprechende Ansteuerungs- und Auswerteschaltungen bzw. ganze Schaltungslayouts oder Logikbausteine zur tatsächlichen Ausgabe von Zufallsereignisse als direkt verarbeitbare Zufallszahlen mit verstanden. Die Zufallszahlen können sich dabei unmittelbar aus der Statistik der Entropiequelle oder beispielsweise durch eine Umwandlung als davon durch zusätzliche Maßnahmen abgeleitete Zufallswerte ergeben. Zur besseren Unterscheidung der abstrakten Definition von einer realen Schaltung wird letztere im Folgenden der Einfachheit halber als Quantenzufallsgenerator bezeichnet. Dies soll jedoch keine Einschränkung bezüglich der beiden genannten Begrifflichkeiten darstellen, sondern lediglich unterschiedliche Aspekte hervorheben. Insofern können die Begriffe Quanten-Zufallszahlengenerator und Quantenzufallsgenerator auch durchaus ein und dieselben Vorrichtung repräsentieren, wobei dann beide Vorrichtungen mindestens eine Entropiequelle einschließen. In einem schaltungstechnischen Blockschaltbild (d. h. auf Schaltungsebene) wird ein erfindungsgemäßer Quanten-Zufallszahlengenerator daher auch kurz als Entropiequelle bezeichnet, während die jeweils durch das Blockschaltbild repräsentierte Schaltung zur Ausgabe direkt verarbeitbarer Zufallszahlen für eine bessere Unterscheidbarkeit als Quantenzufallsgenerator bezeichnet wird.

Insbesondere braucht das Substrat eines Quanten-Zufallszahlengenerators keine weiteren Komponenten zur Ausbildung eines Quantenzufallsgenerators umfassen, sondern, das Substrat kann beispielsweise auch nur ein einzelner Halbleiterkristall sein, der lediglich eine oder mehrere Entropiequellen umfasst. Die weiteren Komponenten eines Quantenzufallsgenerators können in diesem Fall auch extern, beispielsweise auf einem anderen Substrat bereitgestellt werden.

Eine parallel zur Zufallszahlenerzeugung erfolgende statistische Auswertung kann beispielsweise zur weiteren Absicherung der Erzeugung gegenüber möglichen Angriffen auf den Prozess der Zufallszahlenerzeugung genutzt werden. Insbesondere bei aus Einzelkomponenten aufgebauten nicht-integrierten photonischen QRNGs bieten die erforderlichen Übertragungsstrecken innerhalb des Systems dazu vielfältige Angriffsmöglichkeiten. Daher werden solche Systeme zur Erhöhung der Sicherheit möglichst kompakt und isoliert von ihrer äußeren Umgebung realisiert. Neben der Vermeidung von potentiellen Angriffsszenarien ist ein weiterer Vorteil solcher kompakten QRNGs, dass die Zufallszahlenerzeugung eventuell von außerhalb des Systems beeinträchtigende natürliche Einflüsse ebenfalls weitestgehend minimiert werden können. Entsprechend kompakte, auf dem Photonenrauschen basierende QRNGs werden daher bisher üblicherweise als hybridisch integrierte Systeme bereitgestellt.

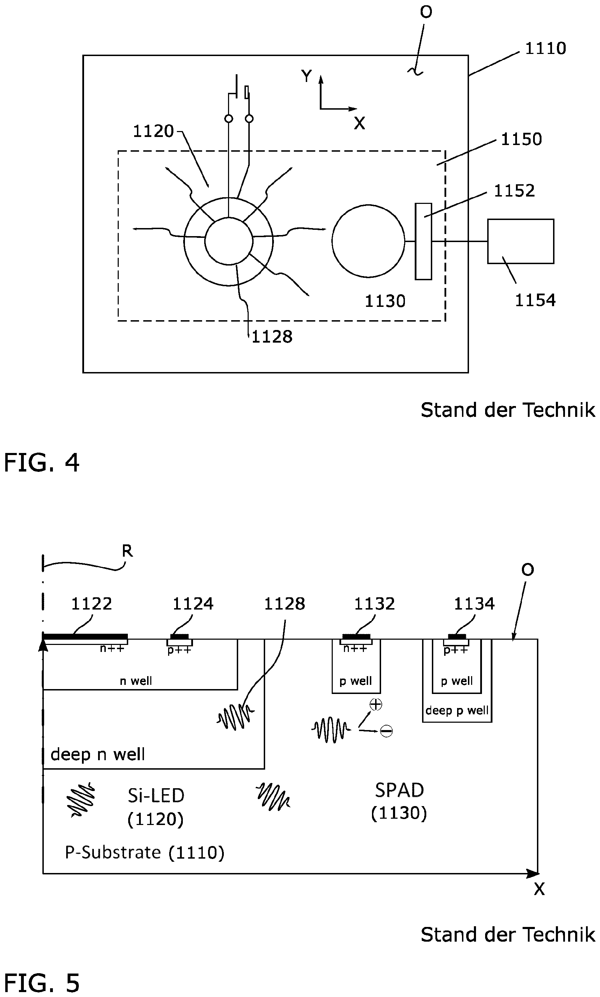

Aus der EP 3 529 694 B1 ist auch ein integrierter Quanten-Zufallszahlengenerator (engl. "integrated Quantum Random Number Generator, iQRNG") mit einer SPS und einer oder mehreren SPDs bekannt, bei dem die SPS und der oder die SPDs vollständig in CMOS-Technologie integriert in einem einzigen Halbleitersubstrat derart angeordnet sind, dass sie unmittelbar nebeneinanderliegen (siehe FIG. 4 mit zugehöriger Figurenbeschreibung). Die SPS wird dabei durch einen zweckmäßig dotierten p-n-Übergang bereitgestellt, so dass sie einen zu detektierenden Photonenstrom erzeugt, wenn die Photonenquelle in geeigneter Weise in Vorwärts- oder Rückwärtsrichtung vorgespannt ist. Bei den SPDs soll es sich insbesondere um SPADs handeln, welche bevorzugt durch gemeinsame Herstellungsprozesse mit den SPSs erzeugt werden und die gleiche chemische Struktur aufweisen.

Die gemeinsame Integration bewirkt, dass der von der SPS erzeugte Photonenstrom durch optisches Übersprechen innerhalb ein und desselben Halbleitermaterials unmittelbar zu einer daneben angeordneten SPAD fließen kann und nicht wie bei anderen aus dem Stand der Technik bekannten hybridisch integrierten QRNGs zunächst einen eventuell leeren, die beiden Komponenten physikalisch voneinander trennenden Kopplungszwischenraum überwinden bzw. durchtunneln muss. Die integrierte "side-by-side"-Konfiguration macht den in der Druckschrift vorgestellten QRNG kompakter und strukturell weniger komplex als hybride QRNGs des gleichen funktionalen Typs. Darüber hinaus ist der Zufallszahlengenerator dank der Integration aller Komponenten deutlich robuster und immuner gegen externe Umwelteinflüsse sowie gegen Manipulationsversuche durch äußere Angreifer.

Allerdings besteht unter deutlich erhöhtem Aufwand hierbei prinzipiell auch weiterhin die Möglichkeit, während des laufenden Betriebs des QRNGs in den Erzeugungsprozess der Zufallszahlen störend, beeinflussend und/oder beobachtend einzugreifen. Da der in der Druckschrift offenbarte iQRNG im Wesentlichen eine planare Struktur aufweist, könnten einzelne Photonen nämlich durchaus von ober- oder unterhalb der Ebene des Substrats abgegriffen oder zusätzlich eingebracht werden.

Die horizontale Nebeneinanderanordnung der Strukturen ist zudem nicht ideal hinsichtlich der Effizienz und des benötigten Flächenverbrauchs. Die Effizienz wird dabei insbesondere durch den erforderlichen seitlichen Abstand zwischen der SPS und der SPAD und eine damit verbundene hohe Absorption der Photonen im Halbleitermaterial beschränkt. Die von der SPS emittierten Photonen werden ohne besondere Vorkehrungen zudem weitgehend ungerichtet in das die SPS umgebende Material ausgesendet, so dass auch dadurch nur ein Teil der erzeugten Photonen von einer zugehörigen SPAD detektiert werden kann. Zwar können mehrere SPADs um eine einzelne SPS herum angeordnet werden, so dass die Effizienz und somit die digitale Entropierate durch gemeinsame Auswertung der so verbundenen SPADs erhöht werden kann, dadurch nimmt jedoch der Flächenverbrauch eines solchen iQRNGs erheblich zu. Anderseits muss auch bei einem einzelnen Emitter-Detektor-Paar sichergestellt werden, dass die nicht detektierten Photonen sich nicht unkontrolliert innerhalb des Substrats ausbreiten und an anderer Stelle im Substrat zu Störungen führen können. Die damit verbundenen seitlichen Sperrbereiche führen daher ebenfalls zu einer Erhöhung des effektiven Flächenverbrauchs des iQRNGs.

Ein ebenfalls in CMOS-Technologie (HV-CMOS) realisierter iQRNG mit einer entsprechenden Anordnung einer Photonenquelle und eines Einzelphotonendetektors nebeneinander ist auch aus Khanmohammadi et al. (Khanmohammadi, Abbas, et al. "A monolithic silicon quantum random number generator based on measurement of photon detection time." IEEE Photonics Journal 7.5 (2015): 1-13) bekannt. Eine in einer kreisförmig oberflächennahen n-Wanne zwischen einem zentralen n⁺⁺-Gebiet als Kathode und mehreren ringförmig darum angeordneten p⁺⁺-Gebieten als Anode ausgebildete Si-LED als Photonenquelle wird dabei kreisringförmig von einer SPAD als Einzelphotonendetektor umschlossen (siehe FIG. 5 mit zugehöriger Figurenbeschreibung). Die von der SPS emittierten Photonen werden dadurch allseitig in der Ebene detektiert, wodurch gegenüber dem aus der EP 3 52 694 B1 bekannten iQRNG bei verringerten Flächenverbrauch die Effizienz erhöht werden kann. Die SPS wird somit unmittelbar in die SPAD integriert. Einzelne Photonen können jedoch auch hierbei ins Substrat emittiert oder an dessen Oberfläche extrahiert werden. Ebenfalls möglich ist auf diesen Wegen auch die Injektion von entsprechenden Photonen eines Angreifers zur Beeinflussung der Statistik.

Von daher besteht zur weiteren Erhöhung der Sicherheit und zur Reduzierung des Flächenverbrauchs Bedarf für eine weitere Miniaturisierung von integrierten QRNGs gegenüber dem Stand der Technik. Der iQRNG sollte weitgehend gegenüber äußeren Angriffen geschützt sein und dabei eine möglichst hohe Effizienz und möglichst geringe Substratverluste aufweisen. Um dabei nicht durch herstellungstechnologische Beschränkungen beim Design von SoCs (engl. "System on Chip, SoC") limitiert zu sein, sollte dabei das zugrundeliegende Herstellungsverfahren möglichst technologieoffen ausgestaltet sein bzw. auf einer möglichst breit anwendbaren Technologieplattform zur Halbleiterstrukturierung basieren.

Ein integrierter Quanten-Zufallszahlengenerator, iQRNG, kann eine Photonenquelle und einen Einzelphotonendetektor, wobei die Photonenquelle und der Einzelphotonendetektor in vertikaler Richtung übereinander in einem gemeinsamen Substrat aus einem Halbleitermaterial angeordnet sind, umfassen. In vertikaler Richtung übereinander bedeutet dabei, dass die Photonenquelle und der Einzelphotonendetektor, bezogen auf eine Oberfläche des Substrats, in unterschiedlichen Tiefen gestapelt zueinander angeordnet sind (eine Nebeneinanderanordnung würde dann beispielsweise in horizontaler Richtung erfolgen). Dabei bedeutet vertikal übereinander bevorzugt, dass die Ausbreitungsrichtung der zwischen der Photonenquelle und dem Einzelphotonendetektor übertragenen Photonen zumindest eine Komponente in besagter vertikaler Richtung aufweist. Die Photonenquelle und der Einzelphotonendetektor können daher durchaus auch einen gegenseitigen seitlichen Versatz oder eine Verkippung der aktiven Bereiche in Bezug auf die Oberfläche des Substrats aufweisen, solange von der Photonenquelle ausgesandte Photonen vom Einzelphotonendetektor mit zumindest einer Komponente der Ausbreitung in besagter vertikaler Richtung detektieren werden können. Besonders bevorzugt ist, wenn die Ausbreitung der Photonen im Wesentlichen (d. h. in strahlenoptischer Näherung ohne Beugungseffekte) nur eine Komponente in besagter vertikaler Richtung (d. h. keine horizontale Komponente) aufweist. Ein beschriebener iQRNG kann auch mehrere an einen einzelnen Einzelphotonendetektor gekoppelte Photonenquellen (z. B. zur Erhöhung der Photonenrate oder der Ausfallsicherheit) oder mehrere an eine einzelne Photonenquelle gekoppelte Einzelphotonendetektoren (z. B. für Überwachungszwecke) umfassen. Ebenfalls möglich ist die Kombination von mehreren Photonenquellen und Einzelphotonendetektoren zu einem einzelnen iQRNG.

Im Gegensatz zum Stand der Technik findet somit keine Nebeneinanderanordnung der einzelnen optoelektronischen Komponenten statt. Vielmehr soll eine kompakte Anordnung einer Photonenquelle und eines Einzelphotonendetektors übereinander in einem gemeinsamen Substrat aus einem Halbleitermaterial erfolgen. Es handelt sich somit hierbei um eine besonders kompakte monolithische 3D-Integration mit minimalem Flächenverbrauch für den iQRNG, wobei die Ausbildung der Strukturen bevorzugt einstückig erfolgen kann. Insbesondere ist hierbei eine Anordnung bevorzugt, bei der der Einzelphotonendetektor zur verbesserten Abschirmung gegenüber äußeren Einflüssen tieferliegend als die Photonenquelle im Halbleitermaterial (d. h. Photonenquelle oben, Einzelphotonendetektor unten) angeordnet ist. In einer alternativen Ausführungsform kann der Einzelphotonendetektor jedoch auch höherliegend als die Photonenquelle im Halbleitermaterial angeordnet sein (d. h. Photonenquelle unten, Einzelphotonendetektor oben). Beispielsweise kann neben einer Inversion des grundsätzlichen Strukturaufbaus bei einer Prozessierung von der Oberfläche des Substrats aus auch eine inverse Anordnung der Elemente durch eine entsprechende Strukturierung von der Rückseite des Substrats aus erfolgen. Insbesondere kann eine Strukturierung beidseitig sowohl von der Vorderseite als auch von der Rückseite des Substrats aus erfolgen.

Vorzugsweise handelt es sich bei der Photonenquelle um eine Einzelphotonenquelle (engl. "Single Photon Source, SPS"), dazu eingerichtet, zeitgleich nur einzelne oder einige wenige Photonen bereitzustellen. Solche zeitgleich nur einzelne oder nur einige wenige Photonen bereitstellende Photonenquellen werden im Rahmen dieser Anmeldung auch als Einzelphotonenquellen bezeichnet. Es muss sich dabei jedoch nicht um echte Einzelphotonenemitter, beispielsweise auf Basis eines einzelnen isolierten Zweiniveausystems, handeln, vielmehr können durch eine entsprechend hohe Abschwächung der Emission bzw. des zugeführten Stroms auch herkömmliche Lichtquellen als SPS ausgebildet werden.

Unter einem Substrat wird im Rahmen der vorliegenden Offenbarung der gesamte Halbleiter-Chip als Körper verstanden, in den beispielsweise mittels CMOS- oder anderer Technologien eine bestimmte Elementstruktur beispielsweise durch Ausbildung von unterschiedlich dotierten Wannen oder Gebieten in das Halbleitermaterial hineinstrukturiert wird. Die Strukturausbildung kann jedoch auch additiv durch Aufbringen von weiteren Schichten und Strukturen bzw. durch eine Abfolge von Ätz- und Aufbringschritten für solche weiteren Schichten und Strukturen erfolgen. Ein entsprechendes Substrat kann daher neben einem sogenannten Träger- oder Grundsubstrat (z. B. ein unstrukturiertes einkristallines Halbleitersubstrat als Basis für das epitaktischen Aufwachsen von weiteren Halbleiterschichten) auch eine Vielzahl solcher epitaktisch aufgewachsen Schichten sowie andere Beschichtungen umfassen. Das Substrat wird in dieser Anmeldung daher als materieller Träger für die Halbleiterstrukturen eines beschriebenen iQRNG und nicht im Sinne eines einfachen Träger- oder Grundsubstrats zum Aufbringen dieser Strukturen verstanden. Insofern stellt vor allem die einstückige Ausbildung eines beschriebenen iQRNG übereinander in einem gemeinsamen Substrat aus einem Halbleitermaterial eine Abgrenzung insbesondere gegenüber mit herkömmlichen Methoden hybridisch integrierten Kombinationen (z. B. mittels Flip-Chip-Montage) aus mindestens einer Photonenquelle und mindestens einem Einzelphotonendetektor etwa auf einem gemeinsamen Submount als Trägerstruktur dar.

Vorzugsweise handelt es sich bei der Photonenquelle um eine an einem Arbeitspunkt unterhalb oder nahe der Durchbruchspannung betriebene lichtemittierende Avalanche Zener-Diode (Zener-avLED). Bevorzugt weist die Zener-avLED eine Durchbruchspannung von < 10 V auf, bevorzugter eine Durchbruchspannung von < 8 V und noch bevorzugter eine Durchbruchspannung von < 7 V. Die Vorteile der Verwendung einer Zener-avLED als Einzelphotonenquelle werden nachfolgend näher erläutert. Diese neue Art von Einzelphotonenquellen erlauben eine hohe Einzelphotonenrate bei relativ geringer Betriebsspannung auch unterhalb und im Bereich der Zener-Durchbruchspannung und zeigen bei entsprechend gewünschter Konstruktion eine bevorzugt gerichtete Abstrahlung der erzeugten Photonen ins Substratinnere und damit in Richtung des Einzelphotonendetektors. Dadurch sind Zener-avLEDs für eine Anwendung als Einzelphotonenquelle in einem iQRNG besonders geeignet.

Vorzugsweise handelt es sich bei dem Einzelphotonendetektor um einen Einzelphotonen-Lawinendioden (engl. "Single Photon Avalanche Diodes, SPADs"). Darunter werden Detektoren verstanden, die aufgrund ihrer besonders hohen Empfindlichkeit bei hoher Verstärkung und geringem (Dunkel)Rauschen prinzipiell dazu in der Lage sind, einzelne Photonen detektieren und nachweisen zu können.

Eine Hauptidee der vorliegenden Erfindung liegt somit darin, durch eine Anordnung einer Zener-avLED und einer SPAD übereinander in einem gemeinsamen Halbleitersubstrat einen besonders kompakten und sicheren integrierten QRNG zur Verfügung zu stellen.

Ein Ansatz zur aufgabengemäßen Verbesserung der aus dem Stand der Technik bekannten iQRNG besteht dabei in der Auswahl einer entsprechend breiten Technologieplattform. Für SoC-Designs mit einem möglichst breiten Spektrum an möglichen Anwendungen bieten integrierte Schaltungen in der Bipolar-CMOS-DMOS-Technologie (BCD-Technologie) auf Silizium ein großes Potential. In BCD-Technologie konnten auch bereits erfolgreich hocheffiziente SPADs demonstriert und realisiert werden. Dabei erlaubt die BCD-Technologie eine besonders effektive und optimierte Integration dieser SPADs mit einer Vielzahl von weiteren funktionalen Gruppen wie etwa digitalen und analogen Schaltungskomponenten, besonders energieeffizienten digitalen Speicher- und Schaltelementen, allgemeiner Leistungs- und Treiberelektronik sowie von Detektor- und Sensorbauteilen.

Die im Stand der Technik bekannten Silizium-basierten SPS können im Prinzip durchaus auch in BCD-Technologien implementiert werden. Aufgrund der ungerichteten Abstrahlung der Photonen sowie einer üblicherweise direkt oberflächennah erfolgenden Implementierung sind solche Si-LEDs jedoch zur Realisierung besonders effizienter und vor Angriffen geschützter iQRNGs nicht optimal. Die oberflächennahe Implementierung bedingt auch zumeist eine Degradation für den Fall einer im Avalanche-Betrieb genutzten Si-LED. Da Silizium als indirekter Halbleiter nur schlecht zur Erzeugung von Photonen geeignet ist und diese im Allgemeinen nur durch weitere Prozesse über eine zusätzliche Wechselwirkung mit dem Kristallgitter generiert werden können, ist die Auswahl an möglichen alternativen Photonenquellen auf Basis von Silizium allerdings stark eingeschränkt.

Bei der Untersuchung von in einer BCD-Technologie in unterschiedlichen Schichten durch entsprechende p-n-Übergänge bereitgestellten Zener-Dioden, welche für einen dauerhaften Arbeitspunkt selbst im Durchbruchbereich optimiert sind, wobei eine oberflächennahe Zener-Diode als Emitter und eine darunter liegende einfache p-n-Diode ohne Vorspannung (engl. "zero bias") als Detektor betrieben wurde, konnte durch die Erfinder gezeigt werden, dass in dieser Konfiguration entgegen der allgemeinen Erwartung des Fachmanns an der Zener-Diode im Avalanche-Betrieb bei der Durchbruchspannung starke Elektrolumineszenz mit einer Effektivität von mindestens 0,03 % beobachtet werden kann. Entsprechende Zener-Dioden sind im Stand der Technik üblicherweise nicht für den Betrieb als optoelektronisches Bauelement (LED) vorgesehen.

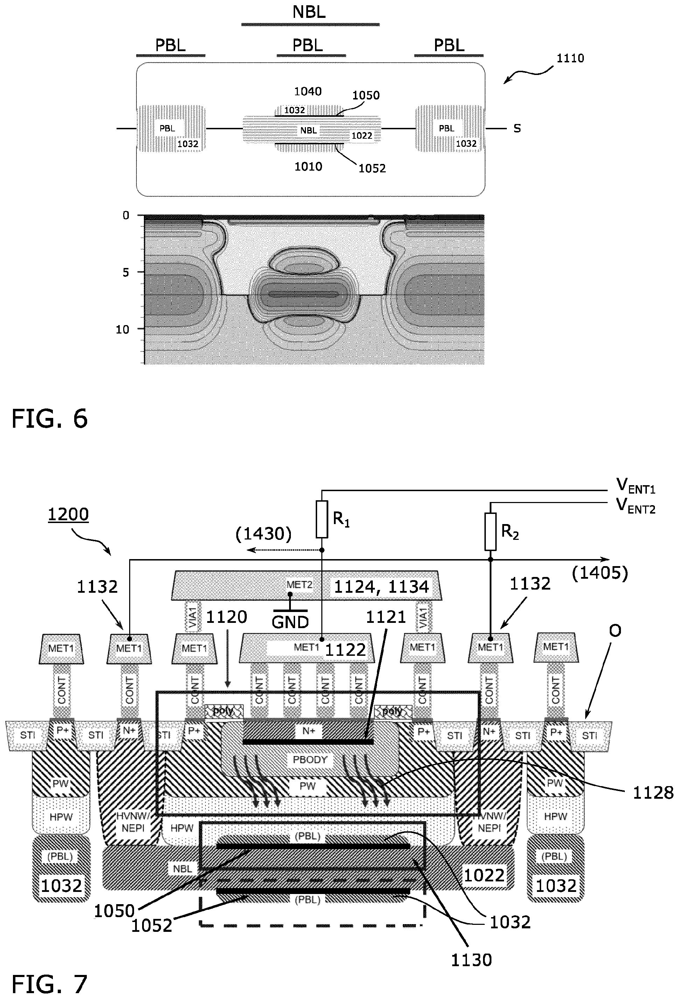

Insbesondere werden die erzeugten Photonen bevorzugt in Richtung der unteren p-n-Diode hin emittiert, welche somit nahezu alle emittierten Photonen detektieren kann, was über einen Photostrom auch in der erfinderischen Struktur nachgewiesen werden kann (vgl. FIGs. 7 bis 10 mit zugehöriger Figurenbeschreibung). Es zeigte sich somit, dass die untersuchte Zener-Diode im Bereich der Durchbruch-/Zener-Spannung eine zwar geringe, aber doch durchaus signifikante Effizienz (ca. ein detektiertes Photon pro 3000 Elektronen des Zener-Diodenstroms) aufweist und daher als Einzelphotonenquellen für die Realisierung von QRNGs in auf Silizium basierenden BCD-Technologie hervorragend geeignet erscheinen. Vor allem die bevorzugte Abstrahlung in Richtung des Detektors bietet gegenüber der isotropen Abstrahlung herkömmlicher in iQRNGs verwendeter Photonenquellen deutliche Vorteile. Dabei ist das in der CMOS-Technologie übliche Silizid zur Darstellung von verringerten Kontaktwiderständen zwischen den Metall-Kontakten und dem Halbleiter Silizid einerseits lichtdicht und andererseits spiegelnd glatt, so dass auch ursprünglich nach oben ausgesandte Photonen am Silizid-Spiegel zurück ins Innere des Substrats reflektiert werden können. Entsprechend ausgebildete und als SPS betriebene Zener-Dioden im Avalanche-Betrieb werden daher im Folgenden im Gegensatz zu den aus dem Stand der Technik bekannten Si-LEDs auch als lichtemittierende Avalanche Zener-Diode (engl.: "Avalanche Light Emitting Zener-Diode, Zener-avLED") bezeichnet.

Die in der verwendeten BCD-Technologie bereitgestellten Zener-avLED emittieren Photonen mit Wellenlängen aus dem sichtbaren Spektralbereich und weisen dabei eine relative geringe Zener-Betriebsspannung von zumeist kleiner als 8 V auf. Da die Abstrahlung einer Zener-avLED zudem typischerweise derart gerichtet ist, dass die Photonen bevorzugt in vertikaler Richtung, d. h. von der Oberfläche weg ins Substrat hinein emittiert werden, kann zudem bei einer Anwendung in einem iQRNG eine wesentlich stärke Isolation der SPS sowie der erzeugten Photonen gegenüber der Umgebung des Halbleitermaterials erreicht werden und ein Abgreifen oder Injizieren von Photonen an der Detektoroberfläche wird deutlich erschwert. Bei geeigneter Ausbildung der zu einem iQRNG gehörenden SPAD kann zudem die Effizienz der Zufallszahlenerzeugung deutlich erhöht und eine unkontrollierte Photonenausbreitung im Halbleitermaterial weitgehend unterbunden werden.

Die zweite wesentliche Komponente zum Aufbau eines kompakten QRNG ist daher die Auswahl eines entsprechend angepassten SPAD-Designs. Typischerweise werden diese in BCD-Technologien ebenfalls oberflächennah durch entsprechende Ausbildung von p- oder n-Wannen realisiert. Solche oberflächennahen SPADs sind mit den in CMOS-Technologie realisierten SPADs im Stand der Technik durchaus vergleichbar. Im Prinzip wäre somit der aus der EP 3 529 694 B1 bekannte iQRNG mit den obenstehend beschriebenen Zener-avLEDs auch in BCD-Technologien realisierbar. Jedoch emittieren die Zener-avLEDs wie obenstehend bereits beschrieben die Photonen mit Vorteil vorzugsweise in Richtung in das Substrat hinein. Eine aus dem Stand der Technik bekannte Nebeneinanderanordnung von einer Zener-avLED als SPS und einer oberflächennahen SPAD ließe sich zwar grundsätzlich, aber nicht unbedingt effektiv umsetzen. Bei der Verwendung von Zener-avLEDs ist es zweckmäßig die zugehörige SPAD daher unterhalb der Zener-avLED anzuordnen.

Die BCD Technologie ermöglicht neben der Implementierung von konventionellen n-SPADs und p-SPADs auch die Umsetzung völlig neuartiger SPAD-Konzepte, u. a. durch die Nutzung tiefliegender n- oder p-dotierten Schichten in einem BCD-Substrat.

Dabei konnte durch ein erst kürzlich ebenfalls von den Erfindern entwickeltes Verfahren zur Erzeugung tiefliegender p-n-Übergänge in einem BCD-Prozess zur Bereitstellung eines entsprechenden BCD-Substrats mit tiefliegenden p-n-Übergängen eine darauf basierende, besonders effiziente, tiefliegende Einzelphotonen-Lawinendiode ("deepSPAD") realisiert werden, welche auf einfache Weise unmittelbar unterhalb einer zur Bereitstellung von Einzelphotonen eingerichteten Zener-avLED angeordnet werden kann. Die Kombination aus einer Zener-avLED in Kombination mit einer tiefliegenden SPAD stellt somit im Gegensatz zu einer auf CMOS-Technologie basierenden horizontalen Integration eines QNRG gemäß Stand der Technik die wesentlichen Komponenten eines vollständig in BCD-Technologie vertikal integrierten QRNG bereit.

Durch die vertikale Anordnung einer Zener-avLED als Emitter und einer mittels extrem tiefliegender p-n-Übergänge realisierten deepSPAD als Empfänger kann in BCD-Technologien ein miniaturisierter, auf einem monolithischen Silizium-Die basierender Quanten-Zufallszahlgenerator mit hocheffizienter optischer Kopplung, hoher Angriffssicherheit sowie geringer Betriebsspannung realisiert werden. Damit stellt das hier vorgestellte iQRNG-Design auf BCD-Basis eine optimale Lösung zur Bereitstellung eines beschriebenen iQRNG dar. Insbesondere kann durch die vertikale 3D-Integration die Kompaktheit eines iQRNG weiter erhöht und der Flächenverbrauch gegenüber herkömmlichen lateralen 2D-Designs bei gleichzeitiger Steigerung der Effizienz reduziert werden.

Vorzugsweise ist ein beschriebener iQRNG daher in einem BCD-Substrat in BCD-Technologie ausgebildet.

Vorzugsweise umfasst das BCD-Substrat dabei ein Trägersubstrat; und eine auf dem Trägersubstrat aufgewachsene epitaktische Schicht, wobei zwischen dem Trägersubstrat und der epitaktischen Schicht durch eine Diffusion von in eine Oberfläche des Trägersubstrats unterhalb der epitaktischen Schicht eingebrachten Dotierstoffen ein in der epitaktischen Schicht liegender tiefliegender p-n-Übergang erzeugt wurde.

Bei dem Trägersubstrat kann es sich bevorzugt um ein p-Substrat handeln. Es können jedoch auch n-Substrate oder intrinsische Substrate verwendet werden. Bei dem Substratmaterial kann es sich insbesondere um Silizium handeln. Die Verfahren sind jedoch prinzipiell auch für andere Halbleitermaterialien adaptierbar. Ein typischer Dotierstoff zur Ausbildung eines p-Gebiets ist Bor. Zur Ausbildung eines n-Gebiets kann Phosphor (P), Arsen (As) oder Antimon (Sb) verwendet werden. Dabei diffundiert beispielsweise in Silizium Bor als Dotierstoff deutlich weiter aus als die schweren Donatoren (P, As oder Sb). Zudem kann festgestellt werden, dass dabei die erzeugten n-Gebiete aufgrund der höheren verwendeten Dosen weitgehend dominant sind, d. h. ein bereits mit Phosphor dotiertes n-Gebiet kann auch nach einem zusätzlichen Einbringen von Bor seinen vorhandenen Leitungstyp beibehalten. Für die Bereitstellung der tiefliegenden p-n-Übergänge kann mitunter auf zusätzliche Masken-, Lithographie- und Epitaxie-Schritte im üblichen BCD-Prozess verzichtet werden.

Vorzugsweise weisen der erste und der zweite Dotierstoff unterschiedliche Diffusionseigenschaften im Trägersubstrat und/oder in der epitaktischen Schicht auf. Bevorzugt weist der zweite Dotierstoff eine höhere Beweglichkeit im Trägersubstrat und/oder in der epitaktischen Schicht auf als der erste Dotierstoff. Vorzugsweise erfolgt das Einbringen des ersten Dotierstoffs und/oder des zweiten Dotierstoffs maskenlos oder über ein Maskenverfahren. Zum maskenlosen Einbringen kann beispielsweise ein direktes lonenstrahlschreibverfahren verwendet werden. Bei einem Maskenverfahren erfolgt das Einbringen mit Hilfe einer zuvor bereitgestellten Maske, wobei das Einbringen beispielsweise über ein chemisches oder physikalisches Abscheideverfahren oder ebenfalls mittels eines lonenstrahlschreibverfahrens erfolgt. Vorzugsweise überlagert unmittelbar nach dem Einbringen des zweiten Dotierstoffs in einer Aufsicht auf die Oberfläche des Trägersubstrats das erste Gebiet oder das zweite Gebiet vollständig das jeweils anderen Gebiet. Vorzugsweise handelt es sich bei dem ersten Bereich um eine tiefliegende n-Schicht (NBL-Schicht) und bei dem zweiten Gebiet um eine tiefliegende p-Schicht (PBL-Schicht).

Vorzugsweise bildet der Einzelphotonendetektor in einem Bereich um den tiefliegenden p-n-Übergang ein Lawinengebiet aus und umfasst ein Absorptionsgebiet zur Umwandlung von Photonen in Elektronen-Lochpaare, wobei sich das Absorptionsgebiet unmittelbar an den tiefliegenden p-n-Übergang anschließt.

Bevorzugt ist, dass der tiefliegende p-n-Übergang zumindest teilweise zwischen einer tiefliegenden n-Schicht als Kathode und einer sich unmittelbar an die tiefliegende n-Schicht anschließenden tiefliegenden p-Schicht ausgebildet ist. Ebenfalls bevorzugt ist, dass das Absorptionsgebiet sich unmittelbar an die tiefliegende p-Schicht anschließt und im Wesentlichen als p-Gebiet ausgebildet ist. Im Wesentlichen bedeutet dabei, dass das Absorptionsgebiet teilweise auch als intrinsisches Gebiet ausgebildet sein kann. Weiterhin bevorzugt ist, dass eine als p⁺-Gebiet ausgebildete Anode sich unmittelbar an das Absorptionsgebiet anschließt.

Vorzugsweise wird ein unterhalb des in der epitaktischen Schicht liegenden tiefliegenden p-n-Übergangs des Einzelphotonendetektors ausgebildeter zweiter tiefliegender p-n-Übergang (z. B. in dem Trägersubstrat) als zusätzlicher Photodetektor zur Überwachung auf äußere Angriffe genutzt. Durch das besagte Verfahren zur Erzeugung tiefliegender p-n-Übergänge in einem BCD-Prozess ergibt sich nämlich bei einigen Ausführungsformen unterhalb des ersten p-n-Übergangs ein darunterliegender zweiter p-n-Übergang (siehe FIG. 6 mit zugehöriger Figurenbeschreibung). Dieser kann aufgrund seiner weitgehend identischen elektronischen Eigenschaften ebenfalls als Photodetektor bzw. Einzelphotonen-Lawinendiode konfiguriert werden. Da dieser zusätzliche Photodetektor somit unterhalb der eigentlichen QRNG-Anordnung tief vergraben im Halbleitermaterierial angeordnet ist, kann dieser eine Schutzfunktion gegenüber von der Rückseite des Substrats injizierten Photonen bereitstellen. Diese können in unmittelbarer Nähe zum QRNG in einem breiten Winkelbereich detektiert werden. Dadurch lassen sich äußere Angriffe mit hoher Wahrscheinlichkeit erkennen.

Des Weiteren kann der zusätzliche Photodetektor dazu eingerichtet sein, über eine zusätzliche Auswerteelektronik eine Überwachung der Photonenzählrate zu ermöglichen. Unter ansonsten gleichbleibenden Betriebsbedingungen sollten die Photonenquelle und der zugehörige Einzelphotonendetektor abseits der zufälligen statistischen Schwankungen bei den detektieren Photonenereignissen eine in etwa konstante Photonenzählrate aufweisen. Da jedoch eventuell nicht alle von der Photonenquelle emittierten Photonen auch vom zugehörige Einzelphotonendetektor erfasst werden und auch externe natürliche Einflüsse (z. B. kosmische Strahlen) und künstliche Einstrahlungen (z. B. Funkquellen) auch vereinzelte Detektionsereignisse am zusätzlichen Photodetektor verursachen können, wird mit einer gewissen Wahrscheinlichkeit auch der zweite Photodetektor eine in etwa konstante Hintergrundzählrate aufweisen. Abweichungen von diesem langfristigen statistischen Mittelwert können daher auf einen möglichen Fehler innerhalb des iQRNG oder eine externe Störung, etwa durch einen Angreifer, hinweisen. Durch eine erfasste Veränderung der Hintergrundzählrate am zweiten Photodetektor können dabei sowohl aktive Eingriffe eines Angreifers (z. B. Einstrahlung zusätzlicher Photonen zur Änderung bzw. Beeinflussung der Photonenstatistik) als auch passive Angriffe, etwa durch das gezielte Abdünnen einer Abschirmung zur Erhöhung der Transmission von einzelne Photonen nach Außen (was u. U. jedoch auch eine zusätzliche Einstrahlung von Umgebungslicht aus dieser Richtung verursachen kann).

Da es sich auch bei den Hintergrundzählraten um statistische Größen handelt, bietet sich für die Auswertung im Hinblick auf mögliche Abweichungen von zu erwartenden Normalwerten eine Analyse auf der Grundlage von Methoden des maschinellen Lernens an. Insbesondere kann zur Auswertung auf Methoden der künstlichen Intelligenz zurückgegriffen werden. Insbesondere ist die Verwendung mindestens eines entsprechend trainierten künstlichen neuronalen Netzwerks (KNN) zur Feststellung eines Angriffs und/oder zur Identifizierung möglicher Fehlerquellen und Ereignisse bevorzugt. In der Literatur finden sich eine Vielzahl von unterschiedlichen Arten von KNN, eine Auswahl geeigneter Methoden kann der Fachmann anhand der jeweiligen Erfordernisse treffen.

In einigen Ausführungsformen kann das mindestens eine KNN ein stochastisches neuronales Netz (SNN) umfassen, welches für die gleichen Photonenzählraten variable Ausgaben liefern kann. Hiermit lassen sich Fehler des Netzes beruhend auf den vorhandenen Daten oder einem nicht hinreichenden Training des Netzwerkes untersuchen. Beispielsweise können so auch Abweichungen identifiziert werden, welche nicht vom Abweichungsraum eines Trainingsdatensatzes abgebildet werden (Out-of-Distribution).

Eine weitere mögliche Anwendung des tiefliegenden zweiten p-n-Übergangs als zusätzlicher Photodetektor kann in der Bereitstellung von unabhängigen Zufallszahlen auf der Basis einer weiteren, noch unterhalb des tiefliegenden zweiten p-n-Übergangs bzw. auf oder nahe der Rückseite des Substrats angeordneten unabhängigen Photonenquelle liegen. Vorzugsweise ist hierzu der tiefliegende zweite p-n-Übergang analog zum darüber angeordneten tiefliegenden ersten p-n-Übergang ebenfalls als Einzelphotonendetektor bzw. SPAD eingerichtet. Da auch die Absorption von Photonen im Bereich des ersten Einzelphotonendetektors einer Wahrscheinlichkeitsverteilung unterliegen kann und abhängig von der konkreten Realisierung der Anordnung der einzelnen Elemente durchaus auch einzelne Photonen der eigentlichen Photonenquelle des erfindungsgemäßen iQRNG bis in den Bereich des tiefliegenden zweiten p-n-Übergangs gelangen können, ist es auch möglich, dass diese ebenfalls als Grundlage für eine Bereitstellung von Quantenzufallszahlen, beispielsweise als zusätzlicher unabhängiger iQRNG, genutzt werden können.

Unabhängig von der Nutzung eines tiefliegenden zweiten p-n-Übergangs als zusätzlicher Photodetektor kann ein erfindungsgemäßer iQRNG (bzw. ein entsprechender Quantenzufallsgenerator) jedoch auch einen von den beschriebenen tiefliegenden p-n-Übergängen unabhängigen weiteren Photodetektor umfassen. Vorzugsweise handelt es sich bei dem weiteren Photodetektor um einen ebenfalls in den erfindungsgemäßen iQRNG integrierten Photodetektor, dieser kann jedoch auch hybrid mit dem erfindungsgemäßen iQRNG verbunden sein. Besonders bevorzugt handelt es sich bei dem weiteren Photodetektor ebenfalls um einen Einzelphotonendetektor, z. B. eine SPAD. Der zusätzlicher Photodetektor kann analog zur oben beschriebenen Verwendung des tiefliegenden zweiten p-n-Übergangs ebenfalls zur Überwachung der Funktionsfähigkeit und der Sicherheit eines erfindungsgemäßen iQRNG verwendet werden.

Vorzugsweise sind der tiefliegende erste p-n-Übergang und der tiefliegende zweite p-n-Übergang über ein gemeinsames inneres Terminal, beispielsweise einer gemeinsamen Anode oder Kathode, miteinander verbunden. Typischerweise werden zum Betrieb als Einzelphotonendetektor eingerichtete p-n-Übergang an einer Seite des p-n-Übergangs unmittelbar über das Substrat angeschlossen. Aufgrund einer insbesondere bei BCD-Technologien jedoch üblichen Abschirmung bzw. Isolation der Strukturen und Schaltungen vom Substrat, werden häufig entsprechende Terminals zur Kontaktierung an die Substartoberfläche gelegt. Bei einer erfindungsgemäßen Ausbildung einer p-n-Übergangs-Doppelstruktur ergibt sich jedoch unmittelbar ein gemeinsamer Terminalbereich (Anode oder Kathode), der eine gemeinsame Ansteuerung über eine einzelne Kontaktierung, z. B. an der Substartoberfläche, ermöglicht.

Vorzugsweise ist die Ober- und/oder Unterseite des Substrats im Bereich des iQRNG an einer Oberfläche verspiegelt oder diese umfasst eine lichtblockierende Schicht. Eine Verspiegelung der Oberflächen eines Substrats (z. B. mittels Metallisierung oder dem Aufbringen dichroitischer Schichten) sowie das Aufbringen einer lichtblockierenden Schicht sind im Stand der Technik bekannt und wurden obenstehend bereits diskutiert. Auch bei einem beschriebenen iQRNG können diese Ansätze zu einer Abschirmung gegenüber äußeren Photonen ("Abschattung") sowie zur Erhöhung der Effizienz durch Rückreflektion der von der zugehörigen Photonenquelle erzeugten Photonen genutzt werden. Alternativ oder zusätzlich kann zudem eine entsprechende Verkapselung im Bereich des iQRNG oder das Umgeben dieses Bereichs mit einer Metallbox erfolgen.

Vorzugsweise ist die Oberfläche des Substrats im Bereich des iQRNG mit einer Silizid-Schicht und oberhalb mit einer Metallisierung bedeckt. Bevorzugt ist die Metallisierung im Bereich des iQRNG geschlossen. Die Metallisierung kann als Verspiegelung für den Innenbereich und/oder als wellenlängenunabhängige Abschattung für äußeren Photonen wirken. In gleicher Weise gilt das für eine ausgebildete Silizid-Schicht.

Vorzugsweise wird ein Austreten von durch die Photonen- bzw. Einzelphotonenquelle bereitgestellten Photonen an der Oberfläche des Substrats und/oder der Rückseite des Substrats durch eine Kombination von jeweils mindestens einem Element aus Metallabdeckungen, Seitenwandkontakten und Vias verhindert. Durch die genannten Elemente kann eine weitgehend vollständige Abschirmung bzw. Verkapselung des iQRNG erreicht werden, wodurch neben einer Abschirmung nach außen auch eine hohe Immunität gegenüber äußeren Störungen gewährleistet werden kann.

Im Hinblick auf mögliche Angriffsszenarien sind jedoch neben einer rein optischen Einflussnahme bzw. einem Auslesen von emittierten Photonen noch weitere Zugriffswege von außen denkbar. Ein weiterer Aspekt der vorliegenden Erfindung besteht daher darin, einen erfindungsgemäßen iQRNG, welcher aufgrund seiner spezifischen Anordnung der umfassten Photonenquelle und des zugehörigen Einzelphotonendetektors bereits eine gegenüber dem Stand der Technik deutlich erhöhte Sicherheit bietet, noch weiter gegen unberechtigte Zugriffe und eine Einflussnahme von außen, beispielsweise durch Beobachter bzw. Angreifer, zu härten. Auf eine mögliche optische Abschirmung wurde obenstehend bereits eingegangen, weitere Angriffe könnten beispielsweise auf der Basis einer gezielten Auswertung oder Beeinflussung chemischen oder elektronischer Eigenschaften der erfindungsgemäßen iQRNG erfolgen.

Wie eingangs bereits ausgeführt, nutzen Quanten-Zufallszahlengeneratoren die Prinzipien der Quantenmechanik, um echte Zufallszahlen zu erzeugen, die in der Kryptografie und anderen sicherheitskritischen Anwendungen verwendet werden können. Diese Zufallszahlen sind von entscheidender Bedeutung, da sie die Grundlage für sichere Verschlüsselungsschlüssel und andere kryptografische Prozesse bilden. Trotz ihrer theoretischen Sicherheit können QRNGs jedoch anfällig für verschiedene Arten von Seitenkanalangriffen sein, die die Integrität und Vertraulichkeit der generierten Zufallszahlen gefährden können.

Ein möglicher Angriffsvektor ist die elektromagnetische Abstrahlung. QRNGs können elektromagnetische Signale aussenden, die von einem Angreifer abgefangen und analysiert werden können. QRNGs können elektromagnetische Signale aussenden, die von einem Angreifer abgefangen und analysiert werden können. Diese Signale könnten Informationen über die internen Zustände des QRNGs preisgeben, was es einem Angreifer ermöglichen könnte, die generierten Zufallszahlen zu rekonstruieren oder vorherzusagen. Um solche Angriffe zu verhindern, sollten QRNGs gut abgeschirmt und gegen elektromagnetische Abstrahlung geschützt werden.

Ein weiterer Angriffsvektor ist der Stromverbrauch. Der Stromverbrauch eines QRNGs kann variieren, je nachdem, welche Zufallszahlen generiert werden. Ein Angreifer könnte diese Schwankungen messen und daraus Rückschlüsse auf die erzeugten Zufallszahlen ziehen. Dies könnte durch den Einsatz von hochsensiblen Strommessgeräten geschehen, die in der Lage sind, kleinste Veränderungen im Stromverbrauch zu detektieren. Um solche Angriffe zu verhindern, sollten QRNGs so gestaltet werden, dass ihr Stromverbrauch unabhängig von den generierten Zufallszahlen konstant bleibt.

Auch die Temperaturabhängigkeit kann eine Rolle spielen. Die Leistung von QRNGs kann temperaturabhängig sein, was bedeutet, dass Änderungen der Umgebungstemperatur die Zufallszahlengenerierung beeinflussen könnten. Ein Angreifer könnte die Temperatur des Geräts manipulieren, um die Zufallszahlen zu beeinflussen oder vorherzusagen. Um solche Angriffe zu verhindern, können QRNGs in temperaturkontrollierten Umgebungen betrieben werden und über Mechanismen verfügen, die ihre Leistung unabhängig von Temperaturschwankungen stabil halten.

Bei optischen QRNGs wie einem erfindungsgemäßen iQRNG, könnte ein Angreifer auch versuchen, die Lichtquelle zu beeinflussen oder die Detektoren zu überwachen, um die generierten Zufallszahlen zu manipulieren. Dies könnte durch das Einbringen von zusätzlichem Licht oder durch das Blockieren von Licht geschehen. Um solche Angriffe zu verhindern, sollten optische QRNGs gut abgeschirmt und gegen äußere Einflüsse geschützt werden.

Weiterhin gibt es sogenannte Timing-Angriffe. Durch die Messung der Zeit, die ein QRNG für die Generierung von Zufallszahlen benötigt, könnte ein Angreifer Muster erkennen und die Zufallszahlen vorhersagen. Dies könnte durch den Einsatz von hochpräzisen Zeitmessgeräten geschehen, die in der Lage sind, kleinste Unterschiede in der Generierungszeit zu detektieren. Um solche Angriffe zu verhindern, sollten QRNGs so gestaltet werden, dass ihre Generierungszeit unabhängig von den erzeugten Zufallszahlen konstant bleibt.

Chemische Angriffe auf halbleiterintegrierte QRNGs sind ein bisher weniger erforschtes, aber potenziell durchaus ernstzunehmendes Risiko. Diese Angriffe könnten beispielsweise darauf abzielen, die physikalischen Eigenschaften der Halbleiterkomponenten zu verändern, um die Zufallszahlengenerierung zu beeinflussen oder zu stören.

Ein möglicher Ansatz für chemische Angriffe besteht darin, die Halbleitermaterialien durch chemische Reaktionen zu verändern. Dies könnte durch die Einwirkung von korrosiven Substanzen geschehen, die die Integrität der Halbleiterstrukturen beeinträchtigen. Solche Angriffe könnten die Leistung der QRNGs beeinträchtigen, indem sie die Effizienz der Lichtquellen oder Detektoren verringern oder die elektrischen Eigenschaften der Schaltkreise verändern.

Ein weiterer potenzieller chemischer Angriff könnte die gezielte Dotierung der Halbleitermaterialien umfassen. Durch das Einbringen von Fremdatomen in die Halbleiterschicht könnte ein Angreifer die elektronischen Eigenschaften des Materials verändern und somit die Zufallszahlengenerierung beeinflussen. Dies könnte zu einer Vorhersagbarkeit der generierten Zufallszahlen führen, was die Sicherheit der QRNGs erheblich beeinträchtigen würde.

Obwohl chemische Angriffe auf QRNGs derzeit eher theoretischer Natur sind und in der Praxis noch nicht weit verbreitet sind, sollten diese potenziellen Bedrohungen mit berücksichtigt werden und es sollten Maßnahmen ergreifen werden, um die chemische Stabilität und Integrität der QRNGs zu gewährleisten. Dies kann beispielsweise durch den Einsatz von Schutzbeschichtungen, die Auswahl chemisch resistenter Materialien und die Implementierung von Überwachungsmechanismen zur Erkennung von chemischen Veränderungen geschehen.

Diese potentiellen Angriffsszenarien zeigen, dass selbst hochmoderne QRNGs nicht vollständig vor Seitenkanalangriffen geschützt sind. Es ist daher wichtig, zusätzliche Sicherheitsmaßnahmen zu implementieren, um die Integrität und Vertraulichkeit der generierten Zufallszahlen zu gewährleisten. Dazu gehören unter anderem die physische Abschirmung der Geräte, die Implementierung von Mechanismen zur Stabilisierung des Stromverbrauchs und der Generierungszeit sowie der Betrieb in kontrollierten Umgebungen.

Bei einem erfindungsgemäßen iQRNG können die besagten Abschirmungen unmittelbar über das realisierte Struktursystem selbst bzw. die vergrabene Anordnung der Entropiequelle im Inneren eines Substrats erreicht werden. Eine Abschirmung sowohl gegen elektromagnetische als auch optische Ab- bzw. Einstrahlung kann beispielsweise durch eine gemeinsame und durchgehende Metallisierung der Oberfläche des Substrats oberhalb des gesamten Bauraums des iQRNGs (bzw. der zugehörigen Entropiequelle) erreicht werden. An der entsprechenden Stelle an der Unterseite des Substrats kann ebenfalls eine Metallisierung zur Abschirmung des unteren Bauraums vorgenommen werden. Diese einzelnen Metallisierungen können dabei neben Ihrer Schirmungsfunktion auch gleichzeitig eine elektrische Kontaktierung einzelner Bereiche des iQRNG ermöglichen. Vorzugsweise können dabei zur Erhöhung der Schichtdicke mehrere Metallisierungsebenen übereinander angeordnet werden (z. B. 12-15 Lagen).

Metallische Mehrschichtlagen bietet in der Regel eine bessere Abschirmwirkung als eine einfache Metalllage. Dies liegt daran, dass mehrere Schichten aus unterschiedlichen oder gleichen Metallen kombiniert werden können, um die Abschirmwirkung zu maximieren. Ein Grund dafür ist, dass jede Metallschicht elektromagnetische Wellen reflektieren und absorbieren kann. Durch die Kombination mehrerer Schichten wird die Wahrscheinlichkeit erhöht, dass die Wellen mehrfach reflektiert und absorbiert werden, was die Gesamtabschirmung verbessert. Unterschiedliche Metalle haben unterschiedliche Abschirmungseigenschaften. Durch die Kombination von Metallen mit komplementären Eigenschaften kann eine effektivere Abschirmung erreicht werden. Zum Beispiel könnte eine Schicht aus einem hochleitfähigen Metall wie Kupfer mit einer Schicht aus einem ferromagnetischen Material wie Nickel kombiniert werden. Mehrere Schichten können auch helfen, die Durchdringungseffekte zu dämpfen, die bei einer einzelnen Schicht auftreten könnten. Dies ist besonders wichtig bei hochfrequenten elektromagnetischen Wellen, die dazu neigen, dünne Metallschichten zu durchdringen. Mehrschichtige Abschirmungen bieten zudem eine zusätzliche Sicherheitsebene. Wenn eine Schicht beschädigt oder korrodiert wird, können die anderen Schichten weiterhin eine effektive Abschirmung bieten.

Anstatt einer oder mehrerer Metallschichten kann zur Abschirmung gegenüber elektromagnetischer Strahlung (inklusive Photonen) auch eine Schicht aus Polysilizium auf die Oberfläche des Substrats im Bereich des iQRNG aufgebracht werden. Polysilizium wird häufig in der Halbleiterindustrie verwendet, insbesondere bei der Herstellung von Transistoren und Solarzellen. Es hat zwar nicht die gleichen Abschirmungseigenschaften wie Metalle und ist zudem für Photonen bei gleicher Dicke zumeist optisch transparenter, es handelt sich aber um ein prozesstechnologisch günstigeres Verfahren, welches deutlich einfacher umzusetzen ist.

Des Weiteren kann eine Abdeckung eines den erfindungsgemäßen iQRNG umfassenden Schaltkreises bzw. ICs (oder eines Bereichs bzw. Teils davon), zusätzlich zu den oben genannten Schichten zur Abschirmung oder als Einzelelement, bevorzugt mit einer Schicht aus Silizium-Nitrid (SiN) erfolgen. Durch eine solche Schicht kann ein bestimmter zuvor eingestellter Wasserstoffgehalt (H₂) in einem IC möglichst konstant gehalten werden, da SiN-Schichten nur eine geringe Permeabilität hierfür aufweisen. Ein konstanter Wasserstoffgehalt ist bei der Herstellung und dem Betrieb von ICs aus mehreren Gründen wichtig. Zunächst hilft Wasserstoff, Defekte in Halbleitermaterialien wie Silizium zu vermeiden. Diese Defekte können die elektrischen Eigenschaften der Halbleiterbauelemente beeinträchtigen und zu Fehlfunktionen führen. Ein konstanter Wasserstoffgehalt minimiert solche Defekte und gewährleistet die Zuverlässigkeit der ICs. Darüber hinaus wird Wasserstoff oft verwendet, um die Oberflächen von Halbleitermaterialien zu passivieren. Dies bedeutet, dass Wasserstoff an die Oberflächenatome bindet und so die Anzahl der freien Elektronen reduziert, die unerwünschte chemische Reaktionen verursachen könnten. Eine konstante Wasserstoffkonzentration stellt sicher, dass die Passivierung effektiv bleibt. Wasserstoff kann auch dazu beitragen, die Oxidation von Metallverbindungen in den ICs zu reduzieren. Oxidation kann die Leitfähigkeit von Metallverbindungen verringern und somit die Leistung der ICs beeinträchtigen. Ein konstanter Wasserstoffgehalt hilft, die Oxidation zu kontrollieren und die Leitfähigkeit der Metallverbindungen zu erhalten. Schließlich tragen Schwankungen im Wasserstoffgehalt zu Veränderungen der elektrischen Eigenschaften der Halbleitermaterialien bei. Dies kann die Leistung und Zuverlässigkeit der ICs beeinträchtigen und zudem einen chemischen Angriffsvektor öffnen. Ein konstanter Wasserstoffgehalt hilft dabei, die elektrischen Eigenschaften stabil zu halten und eine gleichbleibende Leistung zu gewährleisten.

Der seitliche Bereich um den iQRNG bzw. die umfasste Entropiequelle herum kann durch eine entsprechende Tiefendotierung des Substrats bzw. dessen Ausgestaltung als leitfähiger Bereich erfolgen. Eine solche Anordnung kann analog zu einer Metallisierung der Oberflächen des Substrats gleichzeitig zur Tiefenkontaktierung von innerhalb des Substrats liegenden Bereichen, wie beispielsweise zur Kontaktierung von vergrabenen Schichten, genutzt werden. Zur Vermeidung zusätzlicher elektromagnetischer Abstrahlungen aus diesen Strukturen heraus werden diese jedoch vorzugsweise nicht zur Übertragung von modulierten Signalen genutzt. In den in den Figuren gezeigten beispielhaften Ausführungsformen erfindungsgemäßer iQRNG ist dieser Schirmungsbereich jeweils als isolierte äußere, sich in vertikaler Richtung von der Oberfläche ausgehend in das Substrat erstreckende Tiefenstrukturen zu erkennen. In einer bevorzugten Ausführungsform eines erfindungsgemäßen iQRNG wird die "Detektorfläche" des Einzelphotonendetektors als kreisrunde Struktur ausgebildet, so dass die seitliche Abschirmung dann vorzugsweise eine geschlossene kreisringförmige Zylinderstruktur ausbildet (die Abschirmung kann jedoch beliebige, vorzugsweise seitlich geschlossene, Formen aufweisen). Eine solche Anordnung einer seitlichen Abschirmung gegenüber elektromagnetischer Strahlung wird auch als sogenannter Seal-Ring (iQRNG-Seal-Ring) bezeichnet.

Ebenfalls zur Abschirmung können die in BCD-Technologien typischerweise ausgebildeten isolierenden Wannenbereiche, hier insbesondere um die Photonenquelle und den Einzelphotonendetektor herum, eingesetzt werden. Diese werden üblicherweise zur elektrischen Isolation verschiedener Gebiete in einem Substrat genutzt, so dass beispielsweise auch unterschiedlich Bezugspotentiale (GND) in diesen Gebieten bereitgestellt werden können. Eine solche lokale Isolation wirkt jedoch auch stromsperrend für Signalübertragungen und kann bei geeigneter Ausbildung der einzelnen Wannengebiete auch eine elektromagnetische Kopplung der isolierten Gebiete untereinander effektiv unterdrücken.

Als weiteres Abschirmelement kann eine übliche Verkapselung eines erfindungsgemäßen iQRNG (bzw. eines einen oder mehrere erfindungsgemäße iQRNG umfassenden ICs) mit einem fachüblichen Vergussmaterial wir Kunststoff erfolgen. Bei dem Kunststoff kann es sich insbesondere um Duroplast handeln. Dem Duroplast kann dabei Siliziumoxid (z. B. SiO₂) zur Anpassung des thermischen Ausdehnungskoeffizienten der miteinander verbundenen Materialien hinzugegeben werden.

Vorzugsweise sind mehrere beschriebene iQRNG bzw. ein vielkanaliges QRNG-System umfassend eine Vielzahl beschriebener iQRNG auf dem gleichen Substrat realisiert. Zusammen mit einer kompakten Abschirmung der einzelnen iQRNG lassen sich dabei sehr hohe Integrationsdichten mit einer hohen Anzahl an dicht gepackten, voneinander entkoppelter iQRNG und damit insgesamt hohe effektive Zufallszahlenraten erreichen. Bei iQRNG im Stand der Technik ist die Integrationsdichte vor allem durch die strukturelle Nebeneinanderanordnung der einzelnen Komponenten beschränkt.

Vorzugsweise umfasst ein beschriebener QRNG eine elektronische Schaltung zur Generierung und Ausgabe einer digitalen Zufallszahlenfolge basierend auf der statistischen Auswertung der zeitlichen Abfolge von Signalen des Einzelphotonendetektors.

Ein weiterer Aspekt betrifft eine integrierte elektronische Schaltung (engl. "Integrated Circuit, IC"), umfassend mindestens einen beschriebenen iQRNG. Insbesondere kann es sich dabei um ICs für Anwendungen auf der Basis von sicherheitsrelevanten Chip-basierten Systemen (engl. "System on Chip, SoC") handeln.

Vorzugsweise wird ein beschriebener iQRNG dabei in einen Pad-Rahmen (auch als Pad-Rand bezeichnet) der integrierten elektronischen Schaltung platziert. Bei nicht Pad-bestimmten integrierten elektronischen Schaltungen befinden sich typischerweise im Pad-Rahmen eine Vielzahl an freien Flächen, die jedoch typischerweise nicht für digitale Schaltungen oder größere analoge Schaltungsblöcke genutzt werden können. Da ein beschriebener iQRNG aufgrund seines äußerst kompakten Aufbaus jedoch entsprechend kleinbauend ist und auch die nachfolgende Schaltungstechnik üblicherweise nur eine geringe Anzahl an Gattern umfasst, kann diese Art von QRNG dennoch in einen üblichen Pad-Rahmen integriert werden. Durch den äußerst kompakten Aufbau der beschriebenen iQRNG können dieser auch platzsparend und ohne größeren Aufwand in bereits bestehende Designs für integrierte elektronische Schaltungen implementiert werden. Dadurch wird gegenüber herkömmlichen Ansätzen zur Integration von QRNGs eine signifikante Reduzierung des Flächenverbrauchs erreicht. Die Vorteile eines beschriebenen iQRNG können dabei voll ausgeschöpft werden.

Die Vorteile eines beschriebenen iQRNG gegenüber den bekannten Implementierungen im Stand der Technik basieren vor allem auf der weiteren Miniaturisierung des gesamten Zufallszahlengeneratoraufbaus und die dadurch erreichte hochgradige Integration bzw. Miniaturisierung der erzeugten Strukturen. Aufgrund der vollständigen Isolation der SPS und der zugehörigen SPAD gegenüber der Umgebung kann die Sicherheit der Zufallszahlenerzeugung deutlich erhöht werden. Die gerichtete vertikale Abstrahlung aus der als SPS verwendeten Zener-avLED trägt ebenfalls zur Erhöhung der Sicherheit sowie zu einer wesentlichen Steigerung der Effizienz der Zufallszahlenerzeugung bei.

Eine Kointegration einer geeigneten Photonenquelle und eines Einzelphotonendetektors auf dem gleichen vertikalen Layout-Querschnitt eines gemeinsamen Substrats zu realisieren, insbesondere bei Verwendung einer üblicherweise verwendeten kostengünstigen Planartechnologie (d. h. unter Prozessierung nur von einer Substratseite aus und ohne eine Verwendung von anderen aufwändigen Ansätzen, wie etwa Hybrid-Integration, z. B. via eines Chiplet-Ansatzes) ist bisher im Stand der Technik derart nicht möglich gewesen.

Ein mittels einer neuartigen BCD-Technologie bereitgestellter, unterhalb des p-n-Übergangs der SPAD ausgebildeter zweiter tiefliegender p-n-Übergang kann als zusätzlicher Photodetektor zur Überwachung von Angriffen insbesondere von der Rückseite des Substrats ausgehend genutzt werden. Dabei können die Effizienz der optischen Einkopplung in die zugehörigen SPADs sowie die Isolation und die Sicherheit durch die Nutzung von internen Metall- und Silizid-Spiegeln weiter gesteigert werden. Für die verwendeten Zener-avLED als Photonenquelle ist im Vergleich zum Stand der Technik nur eine relativ geringe Betriebsspannung von < 8 V erforderlich. Da zudem die Absorptionslänge des emittierten sichtbaren Lichts im Silizium gering (d. h. der zugehörige Absorptionskoeffizient hoch) ist, kann auch eine sehr gute optische Isolation zwischen benachbarten Elementen erzielt werden. Dies ermöglicht die Anordnung in einem Array mit hoher Zellendichte und einer daraus folgenden entsprechend hohen Erzeugungs- bzw. Entropierate.

Weitere Aspekte der vorliegenden Erfindung sind in den abhängigen Ansprüchen oder in der folgenden Beschreibung der Zeichnungen offenbart.

### Kurze Beschreibung der Figuren

Die Erfindung wird nachfolgend in Ausführungsbeispielen anhand der zugehörigen Zeichnungen erläutert. Es zeigen:
- Figur 1: eine schematische Darstellung einer ersten Ausführungsform der vorliegenden Erfindung, bei der der BIOS-Flash-Speicher in einem kryptographischen Coprozessor untergebracht ist, der an den PCI-Bus angeschlossen werden kann;
- Figur 2: ein Ablaufdiagramm der Vorgänge, die bei der vorliegenden Erfindung während eines normalen Lesezugriffs auf das BIOS-Programm durch den Host-Prozessor ablaufen;
- Figur 3: ein Ablaufdiagramm der Vorgänge, die bei der vorliegenden Erfindung während eines Upgrades des BIOS-Programms auftreten;
- Figur 4: eine schematische Darstellung einer ersten Ausführungsform eines iQRNG gemäß Stand der Technik in der Aufsicht;
- Figur 5: eine schematische Darstellung einer zweiten Ausführungsform eines iQRNG gemäß Stand der Technik in einer Seitenansicht;
- Figur 6: eine schematische Darstellung eines mit einem Verfahren zur Bereitstellung tiefliegender p-n-Übergänge in einem BCD-Prozess bereitgestellten BCD-Substrats und eine TCAD-Darstellung der resultierenden Dotierstoffverteilung;
- Figur 7: eine schematische Darstellung einer beispielhaften ersten Ausführungsform eines beschriebenen iQRNG;
- Figur 8: eine schematische Darstellung einer beispielhaften zweiten Ausführungsform eines beschriebenen iQRNG;
- Figur 9: eine schematische Darstellung einer beispielhaften dritten Ausführungsform eines beschriebenen iQRNG;
- Figur 10: graphische Darstellung der Abhängigkeit des a) SPAD-Stroms und b) des Verhältnisses zwischen SPAD-Strom und Zener-Strom in Abhängigkeit von der Zener-Sperrspannung bei verschiedenen SPAD-Sperrspannungen (kleiner, gleich, größer der Durchbruchspannung) innerhalb eines beschriebenen iQRNGs;
- Figur 11: eine schematische Darstellung einer beispielhaften elektronischen Schaltung eines Quantenzufallsgenerators zur Generierung und Ausgabe einer digitalen Zufallszahlenfolge; und
- Figur 12: eine schematische Darstellung eines beispielhaften Layouts einer integrierten elektronischen Schaltung mit einem beschriebenen iQRNG im Pad-Rahmen in der Aufsicht.

### Detaillierte Beschreibung der Figuren

Es werden nun detaillierte Ausführungsformen beschrieben, die beispielhaft in den beigefügten Zeichnungen dargestellt sind. Die Wirkungen und Merkmale dieser Ausführungsformen werden unter Bezugnahme auf die beigefügten Zeichnungen beschrieben. In den Zeichnungen bezeichnen gleiche Bezugsziffern, gleiche Elemente und auf redundante Beschreibungen wird verzichtet. Die vorliegende Offenbarung kann in verschiedenen Formen verwirklicht werden und ist nicht so zu verstehen, dass sie nur auf die hier dargestellten Ausführungsformen beschränkt ist. Vielmehr sind diese Ausführungsformen Beispiele, damit diese Offenbarung gründlich und vollständig ist und dem Fachmann die Aspekte und Merkmale der vorliegenden Offenbarung vollständig vermittelt.

Verfahren, Elemente und Techniken, die für den Fachmann zum vollständigen Verständnis der Aspekte und Merkmale der vorliegenden Offenbarung nicht notwendig sind, werden daher gegebenenfalls nicht beschrieben. In den Zeichnungen können die relativen Größen von Elementen, Schichten und Bereichen zur Verdeutlichung übertrieben dargestellt sein.

Wie hierin verwendet, schließt der Begriff "und/oder" alle Kombinationen von einem oder mehreren der aufgeführten Elemente ein. Ferner bezieht sich die Verwendung von "kann" bei der Beschreibung von Ausführungsformen der vorliegenden Offenbarung auf "eine oder mehrere Ausführungsformen der vorliegenden Offenbarung". In der folgenden Beschreibung von Ausführungsformen können die Begriffe in der Einzahl auch die Mehrzahl umfassen, sofern aus dem Kontext nicht eindeutig etwas Anderes hervorgeht.

Obwohl die Begriffe "erste" und "zweite" zur Beschreibung verschiedener Elemente verwendet werden, sollten diese Elemente nicht durch diese Begriffe eingeschränkt werden. Diese Begriffe werden nur verwendet, um ein Element von einem anderen Element zu unterscheiden.

So kann beispielsweise ein erstes Element als zweites Element bezeichnet werden, und ebenso kann ein zweites Element als erstes Element bezeichnet werden, ohne dass dies vom Anwendungsbereich der vorliegenden Offenbarung abweicht. Ausdrücke wie "mindestens eines von", wenn sie einer Liste von Elementen vorangestellt werden, modifizieren die gesamte Liste und nicht nur die einzelnen Elemente der Liste.

Begriffe wie "im Wesentlichen", "ungefähr" und ähnliche werden als Annäherungsbegriffe und nicht als Gradangaben verwendet und sollen die inhärenten Abweichungen bei gemessenen oder berechneten Werten berücksichtigen, die von Fachleuten erkannt werden. Wenn der Begriff "im Wesentlichen" in Verbindung mit einem Merkmal verwendet wird, das durch einen numerischen Wert ausgedrückt werden kann, bezeichnet der Begriff "im Wesentlichen" einen Bereich von zumindest +/- 5 % des Wertes, der auf den Wert zentriert ist.

Die vorliegende Erfindung bietet ein Verfahren zur Authentifizierung und Validierung einer Code-Aktualisierung, wie z. B. eines BIOS-Upgrades, unter Verwendung kryptographischer Technologie. In der folgenden Beschreibung werden einige Begriffe verwendet, um bestimmte kryptografische Merkmale zu erörtern. Ein "Schlüssel" ist ein Kodierungs- und/oder Dekodierungsparameter, der von konventionellen kryptografischen Algorithmen wie Rivest, Shamir und Adleman ("RSA"), dem sogenannten Data Encryption Algorithm ("DEA"), wie im Data Encryption Standard ("DES") und ähnlichen verwendet wird. Ein "Zertifikat" ist definiert als eine digitale Information (in der Regel ein öffentlicher Schlüssel), die mit einem privaten Schlüssel verschlüsselt ist, der sich im Besitz einer anderen Einrichtung befindet, z. B. eines Herstellers oder einer weithin bekannten vertrauenswürdigen Stelle (z. B. einer Bank, einer staatlichen Stelle, eines Wirtschaftsverbands usw.). Eine "digitale Signatur" ist einem Zertifikat ähnlich, wird aber in der Regel zur Authentifizierung von Daten verwendet. Der Begriff "sicher" bedeutet hier, dass es für einen Unbefugten rechnerisch unmöglich ist, einen Systemschutz erfolgreich zu umgehen. Ein Sicherheitsprozessor ist ein elektronisches Gerät, das in der Lage ist, Sicherheitsfunktionen auszuführen, um die Sicherheit des Systems zu gewährleisten.

Die Authentifizierung und Validierung wird von einem Sicherheitsprozessor durchgeführt, der die BIOS-Firmware enthält. Ein Beispiel für einen solchen Sicherheitsprozessor ist ein kryptografischer Coprozessor. Der Sicherheitsprozessor authentifiziert und validiert die BIOS-Firmware unter Verwendung geheimer Informationen, wie z. B. einer in die BIOS-Aktualisierung eingebetteten digitalen Signatur.

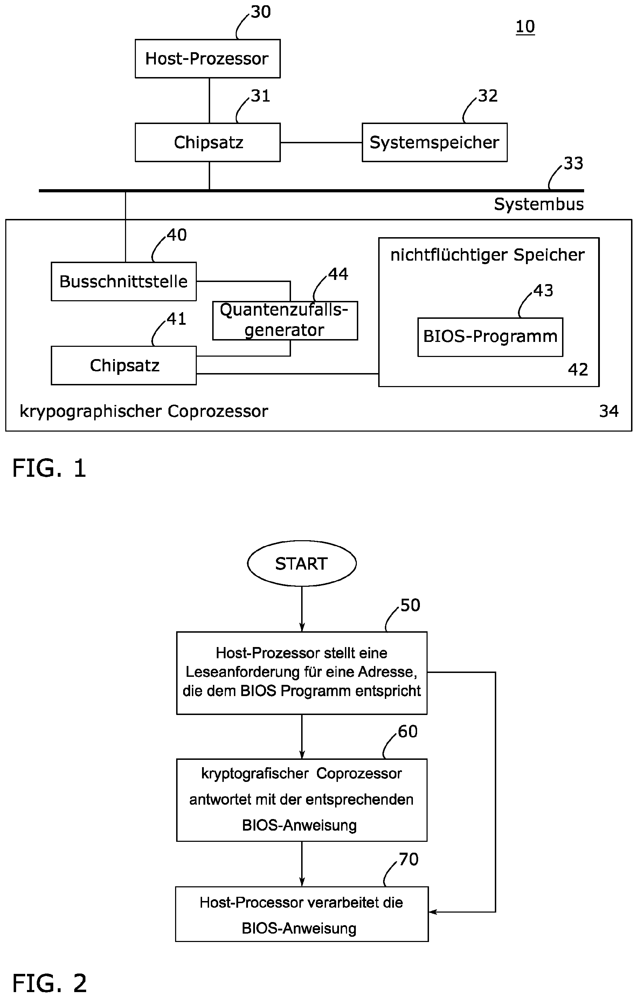

Figur 1 zeigt ein schematische Darstellung einer ersten Ausführungsform der vorliegenden Erfindung, bei der der BIOS-Flash-Speicher in einem kryptographischen Coprozessor untergebracht ist, der an den PCI-Bus angeschlossen werden kann. Das gezeigte Computersystem 10 umfasst einen Chipsatz 31, der als Schnittstelle zur Unterstützung der Kommunikation zwischen dem Host-Prozessor 30, dem Systemspeicher 32 und den mit einem Systembus 33 verbundenen Geräten dient. Der Systemspeicher 32 kann konventionelle Speicher wie verschiedene Arten von Direktzugriffsspeichern ("RAM"), z. B. DRAM, VRAM, SRAM usw., sowie speicherabbildende E/A-Geräte umfassen, ist aber nicht darauf beschränkt. Der Systembus 33 kann in Übereinstimmung mit jeder Art von Busarchitektur implementiert werden, einschließlich dem sogenannten Peripheral Component Interconnect ("PCI"), dem Universal Serial Bus ("USB") und dergleichen.

Zu den Geräten, die an den Systembus 33 angeschlossen werden können, gehört ein kryptografischer Coprozessor 34. Der kryptografische Coprozessor 34 umfasst eine Busschnittstelle 40, eine Verarbeitungseinheit 41 und einen lokalen nichtflüchtigen Speicher 42. Die Busschnittstelle 40 dient dazu, eine elektrische Verbindung zum Systembus 33 herzustellen. Die Verarbeitungseinheit 41 dient als Hauptsteuereinheit für den kryptografischen Coprozessor 34. Die Verarbeitungseinheit 41 hat eine Schnittstelle zu ihrem eigenen lokalen nichtflüchtigen Speicher 42. Das BIOS 43 ist im nichtflüchtigen Speicher 42 gespeichert. Der kryptografischen Coprozessor 34 umfasst einen Quantenzufallsgenerator 44 oder kann auf einen solchen zur Ausführung seiner kryptographischen Aufgaben zugreifen. Der Quantenzufallsgenerator 44 (vgl. FIG. 11, BZ 1400) kann einen beschriebenen QRNG, bevorzugt einen beschriebenen iQRNG (vgl. FIG. 7-9, BZ 1200) umfassen.

Auf die Darstellung unwesentliche Elemente wurde verzichtet, um das Verständnis der vorliegenden Erfindung nicht zu erschweren. Beispiele für nicht wesentliche Elemente, die im kryptografischen Coprozessor 34 verwendet werden können, sind RAM und verschiedene Beschleuniger für kryptografische Algorithmen. Darüber hinaus kann der kryptografische Coprozessor 34 Teil des Host-Prozessors 30 sein, obwohl der Host-Prozessor 30 in FIG. 1 getrennt vom kryptografischen Coprozessor 34 dargestellt ist; in diesem Fall greift der Host-Prozessor 30 direkt auf das BIOS-Programm zu, ohne den Systembus 33 zu benutzen.

Figur 2 zeigt ein Ablaufdiagramm der Vorgänge, die bei der vorliegenden Erfindung während eines normalen Lesezugriffs auf das BIOS-Programm durch den Host-Prozessor ablaufen. Insbesondere handelt sich um die Schritte, die mit der "Boot-up"-Phase des Systems verbunden sind. Zunächst stellt der Host-Prozessor in Schritt 50 eine Leseanforderung für eine Adresse, die dem BIOS-Programm entspricht. Der kryptografische Coprozessor antwortet auf diese Anforderung mit der entsprechenden BIOS-Anweisung (Schritt 60). Schließlich verarbeitet der Host-Prozessor diese Daten in Schritt 70. Um die Verarbeitung von BIOS-Befehlen fortzusetzen, wird diese Sequenz mehrfach wiederholt.

Bei einem typischen BIOS-Upgrade vor Ort schickt der Softwarehersteller (z. B. der BIOS-Anbieter) dem Benutzer eine Datei mit dem neuen BIOS-Code und dem Code zur Durchführung der Upgrade-Vorgänge. Es ist auch möglich, dass der BIOS-Anbieter ein Bulletin-Board-System oder einen entsprechenden Download beispielsweise über das Internet bereitstellt, so dass die Benutzer das BIOS-Upgrade elektronisch und aus der Ferne herunterladen können. Die BIOS-Aktualisierung umfasst im Wesentlichen das Löschen und Beschreiben des BIOS-Flash-Speichers.

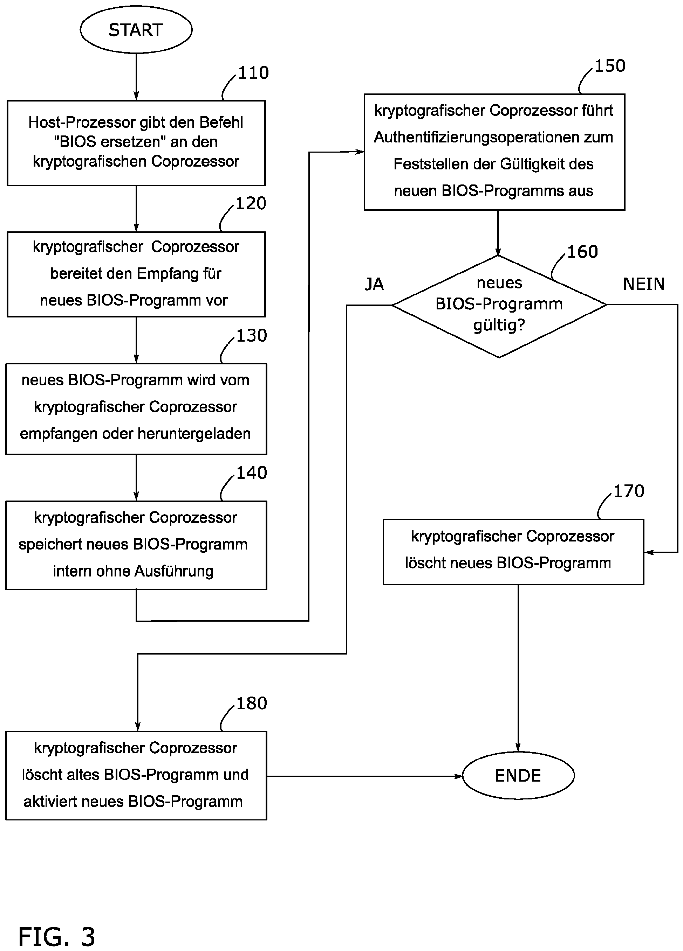

Figur 3 zeigt ein Ablaufdiagramm der Vorgänge, die bei der vorliegenden Erfindung während eines Upgrades des BIOS-Programms auftreten. In Schritt 110 gibt der Host-Prozessor den Befehl "BIOS ersetzen" an den kryptografischen Coprozessor. Dieser Befehl wird in der Regel von einer Art BIOS-Verwaltungsdienstprogramm erzeugt, das entweder auf dem Host-Prozessor selbst oder auf einem entfernten System läuft. Der Zweck dieses Befehls ist es, den kryptografischen Coprozessor (Sicherheitsprozessor) auf ein neues BIOS-Programm vorzubereiten (Schritt 120). In Schritt 130 empfängt der kryptografische Coprozessor den neuen BIOS-Programmcode entweder passiv vom Host-Prozessor oder ruft ihn aktiv aus einer bestimmten Quelle (z. B. dem Systemspeicher) ab. In Schritt 140 wird das neue BIOS-Programm intern oder in einer sonstigen geschützten Weise gespeichert, um sicherzustellen, dass künftige Authentifizierungsvorgänge mit dem angegebenen "neuen BIOS-Programm" durchgeführt werden. In Schritt 150 führt der kryptografische Coprozessor die entsprechenden Authentifizierungsoperationen an dieser intern gespeicherten Version des neuen BIOS-Programms durch. Es gibt viele Möglichkeiten, eine solche Authentifizierung durchzuführen, einschließlich der Verwendung von geheimen Informationen, die nur dem BIOS-Anbieter und dem eingesetzten kryptografischen Coprozessor bekannt sind. Als Teil des Authentifizierungsverfahrens kann die Kryptographie mit öffentlichem/privatem Schlüssel verwendet werden, insbesondere unter Verwendung der bekannten Techniken der digitalen Signaturen und Zertifikate zur Validierung der Integrität und Gültigkeit des "neuen BiaS-Programms". Unabhängig von der verwendeten Authentifizierungstechnik besteht das Hauptmerkmal darin, dass sie innerhalb des kryptografischen Coprozessors an der lokalen Version des neuen BIOS-Programms durchgeführt wird. Nachdem die Authentifizierungsvorgänge durchgeführt wurden, kann der kryptografische Coprozessor in Schritt 160 die Gültigkeit des neuen BIOS-Programms feststellen. Beispielsweise kann die mit dem "neuen BIOS-Programm" gelieferte digitale Signatur gültig sein, aber das Revisionsdatum kann unpassend sein (z. B. älter als das aktuell installierte BIOS). Wird das neue BIOS für ungültig befunden, wird es vom kryptografischen Coprozessor gelöscht und nicht verwendet (Schritt 170). Wenn das neue BIOS gültig ist, wird das neue BIOS-Programm in Betrieb genommen und das vorherige BIOS-Programm gelöscht (Schritt 180). Anschließend sollte das Computersystem neu gestartet werden, um eine systemweite Konsistenz zu gewährleisten.

Um diese auf der digitalen Signatur basierende Methode der BIOS-Authentifizierung zu unterstützen, sollte die in die BIOS-Software-Aktualisierung eingebettete digitale Signatur von einem Branchenverband oder einer ähnlichen Organisation oder Instanz unterschrieben oder gebilligt werden. Die Teilnehmer an einem solchen Branchenverband können beispielsweise die BIOS-Hersteller sein, welche in der Lage sein wollen, ihren BIOS-Code aus der Ferne zu aktualisieren. Eine der Funktionen dieses Branchenverbands kann die Ausstellung digitaler Zertifikate für seine Mitglieder, d. h., jedem Hersteller wird ein digitales Zertifikat zugewiesen, das in der BIOS-Upgrade-Software verwendet werden kann. Dieser Verband kann seinen öffentlichen Schlüssel zur Verfügung stellen, der vom kryptografischen Coprozessor während des BIOS-Authentifizierungsverfahrens verwendet wird. Der kryptografische Coprozessor wird mit dem öffentlichen Schlüssel des Branchenverbands für BIOS-Hersteller vorkonfiguriert, so dass er in der Lage ist, jede in den BIOS-Upgrade-Code eingebettete digitale Signatur zu überprüfen. Alternativ kann der kryptografische Coprozessor mit einem anderen öffentlichen Schlüssel konfiguriert werden, der zur Authentifizierung einer Zertifikatskette verwendet werden kann, um den öffentlichen Schlüssel des Branchenverbands zu erhalten. Der BIOS-Aktualisierungscode kann bei Bedarf verschlüsselt werden (z. B. um den Code vor Reverse-Engineering zu schützen). Da die digitale Signatur oder das vom Branchenverband ausgestellte Zertifikat normalerweise die Authentizität eines seriösen oder glaubwürdigen BIOS-Anbieters darstellt, kann ein Eindringling den BIOS-Code weder direkt noch indirekt durch einen Virenangriff beschädigen (es sei denn, er gelangt irgendwie in den Besitz der geheimen privaten Schlüssel, die zur Erstellung solcher Signaturen oder Zertifikate verwendet werden).

In einer anderen Ausführungsform (nicht dargestellt) ist der kryptografische Coprozessor Teil des Host-Prozessors. Der Host-Prozessor enthält sowohl den kryptografischen Coprozessor als auch das BIOS-Programm. Der Host-Prozessor, der in dieser Ausführungsform selbst als Sicherheitsprozessor fungiert, führt die Authentifizierung und Validierung bei der BIOS-Aktualisierung in ähnlicher Weise wie oben beschrieben durch. Der Host-Prozessor kann mit dem öffentlichen Schlüssel des Branchenverbands der BIOS-Hersteller vorkonfiguriert werden, so dass er in der Lage ist, jede in den BIOS-Upgrade-Code eingebettete digitale Signatur zu überprüfen.

In einer weiteren Ausführungsform (ebenfalls nicht gezeigt) befindet sich das BIOS-Programm auf einer Leiterplatte oder Karte (z. B. Grafikkarte), die in einen Systemerweiterungssteckplatz eingesteckt ist. Der kryptografische Coprozessor kann sich auf derselben Leiterplatte oder Karte oder auf einer anderen Leiterplatte oder Karte oder sogar im Inneren des Host-Prozessors befinden. Unabhängig davon, ob er sich im System befindet, kann der kryptografische Coprozessor, solange er auf das BIOS-Programm zugreifen kann, die oben beschriebenen Authentifizierungs- und Validierungsvorgänge durchführen.

Figur 4 zeigt eine schematische Darstellung einer ersten Ausführungsform eines iQRNG gemäß Stand der Technik in der Aufsicht. Die Darstellung ist an eine entsprechende Figur der EP 3 529 694 B1 angelehnt und zeigt die Oberfläche O eines zugehörigen Substrates 1110, in welches der QRNG integriert ist. Eine kreisförmige Photonenquelle 1120 mit einem zur Bereitstellung von Photonen eingerichteten p-n-Übergang wird über eine entsprechende Kontaktierung mit Strom versorgt und dabei zur Emission einzelner Photonen 1128 angeregt. Zur Detektion der emittierten Photonen 1128 ist neben der Photonenquelle 1120 ein zugehöriger Einzelphotonendetektor 1130 in Form einer SPAD angeordnet. Es handelt sich bei der Photonenquelle 1120 und dem Einzelphotonendetektor 1130 wie bei herkömmlichen hybriden Ansätzen für photonischer QNRGs allerdings auch weiterhin um strukturell und funktional getrennte Elemente, die zur Integration in einem gemeinsamen Substrat lediglich nebeneinander angeordnet werden.

Ein vom Einzelphotonendetektor 1130 bei der Absorption eines Photons 1128 erzeugter Strompuls kann dann zunächst in einem zugehörigen Mittel zur elektronischen Erfassung 1152 ("electronic sampling means") registriert und ausgewertet werden, insbesondere um eine Bitfolge auf der Grundlage der Anzahl der im Einzelphotonendetektor 1130 erfassten Photonen zu erzeugen. Weiterhin ist ein Mittel zur elektronischen Nachbearbeitung 1154 ("electronic post-processing means") vorgesehen, welches so konfiguriert sein soll, dass es die binären Sequenzen des Mittels zur elektronischen Erfassung 1152 so verarbeiten, dass eine sogenannte "Whitening"-Operation durchgeführt wird. Diese soll eine Vielzahl von Kompressionsoperationen umfassen, die dazu dienen, die statistischen Eigenschaften der erzeugten binären Sequenzen zu verbessern. Der Nachbearbeitungsschritt soll das Entropieniveau des QRNG erhöhen. Dabei muss jedoch sichergestellt sein, dass die verwendeten Kompressionsoperationen nicht wiederrum zu einer prinzipiellen Vorhersagbarkeit der erzeugten Zufallszahlen durch Einführung deterministischer Abhängigkeiten bei der Anwendung führen.

Um die Effizienz der Zufallszahlenerzeugung, d. h. die effektive Entropierate, zu erhöhen, wird der photonische Teil des QRNG an der Oberfläche O des Substrats 1110 von einer lichtblockierenden Schicht 1150 ("light inhibitor filter"), welcher zur Abschattung gegenüber einem äußeren Lichteinfall dient, geschützt. Dabei kann die lichtblockierende Schicht 1150 insbesondere durch eine Metallisierungsschicht, die direkt während des Produktionsprozesses, zum Beispiel durch die CMOS-Technik, als letzte Metallisierungsebene aufgebracht werden kann, bereitgestellt werden. Dadurch soll der Photonendetektor 1130 von externem Licht abgeschirmt werden und ihn nur für solche Photonen empfindlich zu machen, die aufgrund des Übersprechens von der Photonenquelle 1120 durch das Substrat 1110 gelangen. Darüber hinaus soll durch die Metallisierungsschicht auch die optische Kopplung der von Photonenquelle 1120 emittierten Photonen 1128 verbessern, indem diese nach innen reflektiert und so an einem Austritt aus der Oberfläche O des Substrats 1110 behindert werden.

Nachteilig bei einer solchen Anordnung der optischen Komponenten nebeneinander ist der Abstand zwischen den Komponenten, welcher die Kopplungsstärke aufgrund von dem geringen Beleuchtungswinkel und der potentiellen Photonenabsorption in den verschiedenen Materialien reduziert. Zudem besteht trotz der partiell aufgebrachten lichtblockierenden Schicht 1150 potentiell auch weiterhin die Möglichkeit des optischen Zugriffs und damit eines Angriffs von der Oberfläche O des Substrats 1110 oder sogar von der Substratrückseite aus. Über dieses können nämlich beispielsweise zusätzliche Photonen gezielt injiziert oder extrahiert werden, so dass letztlich die Zählstatistik und damit die Entropie der erzeugten Zufallszahlen beeinflusst und kompromittiert werden kann. Weiterhin ist in der Darstellung auch zu erkennen, dass die einzelnen Photonen 1128 isotrop in alle Raumrichtungen verteilt emittiert werden, so dass nur ein Bruchteil der Photonen 1128 vom Photonendetektor 1130 erfasst und somit statistisch ausgewertet werden kann. Dies verringert zum einen erheblich die Effizienz der Zufallszahlenerzeugung und führt anderseits dazu, das eine Vielzahl von Photonen 1128 ungenutzt ins Substrat 1110 emittiert werden, wo diese an anderer Stelle eventuell ebenfalls durch Beobachter bzw. Angreifer extrahiert werden oder zu Störungen führen können.

Figur 5 zeigt eine schematische Darstellung einer zweiten Ausführungsform eines iQRNG gemäß Stand der Technik in einer Seitenansicht. Die Darstellung ist an eine entsprechende Figur aus Khanmohammadi et al. (A. Khanmohammadi, R. Enne, M. Hofbauer and H. Zimmermann, "A Monolithic Silicon Quantum Random Number Generator Based on Measurement of Photon Detection Time," in IEEE Photonics Journal, vol. 7, no. 5, pp. 1-13, Oct. 2015, Art no. 7500113) angelehnt. Auch in diesem Beispiel ist der prinzipielle Aufbau einer Nebeneinanderanordnung einer Photonenquelle 1120 (Si-LED), welche zur Aussendung von einzelnen Photonen 1128 eingerichtet ist, und einem Einzelphotonendetektor 1130 (SPAD) klar zu erkennen. Im Unterschied zur in FIG. 4 gezeigten Anordnung wird die Photonenquelle 1120 hierbei jedoch als kreisförmiges zentrales Element bereitgestellt, welches im Wesentlichen vollständig von einem entsprechend angepassten kreisringförmig ausgebildeten Einzelphotonendetektor 1130 umgeben wird. Die gemeinsame radiale Symmetrieachse R liegt entsprechend im Zentrum des derart ausgebildeten iQRNG. Die Photonenquelle 1120 wird dabei durch eine in einer tiefliegenden n-Wanne ("deep n well") ausgebildeten n-Wanne ("n well") realisiert, die über ein in die Oberfläche O des Substrats 1110 ("p-substrate") zentral um die radiale Symmetrieachse R eingebrachtes n⁺⁺-Gebiet als Kathode 1122 und ein daneben angeordnetes p⁺⁺-Gebiet als Anode 1124 mit Strom versorgt wird. Außerhalb der tiefliegenden n-Wanne wird der Einzelphotonendetektor 1130 ebenfalls an die Oberfläche O über ein eingebrachtes n⁺⁺-Gebiet als Kathode 1132 und ein weiter von der radialen Symmetrieachse R entfernt angeordnetes p⁺⁺-Gebiet als Anode 1134 kontaktiert. An die Kathode 1132 schließt sich unterhalb eine p-Wanne ("p well") an. Unterhalb der Anode 1134 ist hingegen in einer tiefliegenden p-Wanne ("deep p well") ein p-Wanne ("p well") ausgebildet. Die Photonenquelle 1120 wird hierbei als Element innerhalb der Struktur des Photonendetektors 1130 bereitgestellt, so dass im Gegensatz zur FIG. 4 diese eine strukturelle und funktionale Einheit bilden.

Auch bei diesem Beispiel für einen iQRNG gemäß Stand der Technik werden die Photonen 1128 im Wesentlichen allseitig in das Substrat 1110 emittiert, so dass die auch bereits zur Ausführungsform nach FIG. 4 beschrieben Nachteile hinsichtlich der Sicherheit gegenüber Beobachtern bzw. Angreifern und zur verringerten Effizienz ebenfalls zutreffen. Durch den spezifischen Aufbau als kreisringförmige Anordnung und die strukturelle Verknüpfung des Einzelphotonendetektors 1130 mit der Photonenquelle 1120 kann gegenüber FIG. 4 jedoch die Integrationsdichte weiter erhöht werden. Dies beinhaltet neben einem geringeren Flächenverbrauch zur Ausbildung des iQRNG auch eine Erhöhung der Sicherheit gegenüber Angriffen sowie eine gesteigerte Effizienz bei der Zufallszahlenerzeugung bzw. der Entropierate als Vorteile. Dies hängt insbesondere auch damit zusammen, dass durch die Verringerung aller Abstände die Verluste an Photonen 1128 durch auftretende Materialabsorption und ungünstige Emissionsrichtungen geringer werden. Zudem wird dadurch die Fläche für mögliche Angriffe verkleinert. Davon abgesehen besteht auch hierbei prinzipiell jedoch ebenfalls auch weiterhin die Möglichkeit insbesondere an der Oberfläche O sowie auch an anderen Stellen des Substrats 1110 zur Beeinflussung der Zählstatistik durch Angreifer einzelne Photonen 1128 auszukoppeln oder zu injizieren. Eine solche Nebeneinanderanordnung der beiden optischen Komponenten eines QRNG weist daher einige Nachteile auf, die einer besonders sicheren, kompakten und zuverlässigen Zufallszahlenerzeugung für SoC-Anwendungen bisher entgegenstehen.

Figur 6 zeigt eine schematische Darstellung eines mit einem Verfahren zur Bereitstellung tiefliegender p-n-Übergänge 1050 und 1052 in einem BCD-Prozess bereitgestellten BCD-Substrats 1110 und eine TCAD-Darstellung der resultierenden Dotierstoffverteilung. Ein Ausführungsbeispiel eines Verfahrens zur Erzeugung tiefliegender p-n-Übergänge 1050 und 1052 in einem BCD-Prozess umfasst ein Bereitstellen eines Trägersubstrats 1010; ein Einbringen eines ersten Dotierstoffs zur Ausbildung eines ersten Gebiets 1022 (z. B. NBL) vom ersten Leitungstyp (negativ für NBL) in eine Oberfläche S des Trägersubstrats 1010; ein Einbringen eines zweiten Dotierstoffs zur Ausbildung eines zweiten Gebiets 1032 (z. B. PBL) vom zweiten Leitungstyp (positiv für PBL) in die Oberfläche S des Trägersubstrats 1010, wobei sich das erste Gebiet 1022 (NBL) und das zweite Gebiet 1032 (PBL) zumindest teilweise überlagern; ein Aufwachsen einer epitaktischen Schicht 1040 auf die Oberfläche S des Trägersubstrats 1010, wobei sich das erste Gebiet 1022 (NBL) und das zweite Gebiet 1032 (PBL) durch Diffusion des ersten Dotierstoffs und des zweiten Dotierstoffs in der epitaktischen Schicht 1040 ausbreiten und dadurch einen in der epitaktischen Schicht liegenden p-n-Übergang 1050 ausbilden.

In der Darstellung handelt es sich bei dem ersten Gebiet 1022 um eine tiefliegende NBL-Schicht und bei dem zweiten Gebiet 1032 um eine tiefliegende PBL-Schicht. Die Reihenfolge ist jedoch vertauschbar, so dass es sich bei dem ersten Gebiet 1022 auch um eine tiefliegende PBL-Schicht und bei dem zweiten Gebiet 1032 um eine tiefliegende NBL-Schicht handeln kann. Über eine entsprechende Anpassung der Diffusionslängen der einzelnen Dotierstoffe kann auch die Schichtfolge der p-n-Übergänge 1050 und 1052 umgekehrt werden, z. B. könnten in FIG. 6 auch die NBL- und PBL-Schichten am p-n-Übergang 1050 und 1052 vertauscht werden.

Das beschriebene Verfahren unterscheidet sich von den herkömmlichen Verfahren zur Bereitstellung von BCD-Substraten 1110 gemäß Stand der Technik insbesondere dadurch, dass sich das erste Gebiet 1022 (NBL) und das zweite Gebiet 1032 (PBL) zumindest teilweise überlagern. Insbesondere kann unmittelbar nach dem Einbringen des zweiten Dotierstoffs in einer Aufsicht auf die Oberfläche S des Trägersubstrats 1010 das erste Gebiet 1022 oder das zweite Gebiet 1032 vollständig das jeweils anderen Gebiet (1032, 1022) überlagern. Daher liegt bei der gezeigten Ausführungsform unmittelbar nach dem Einbringen des zweiten Dotierstoffs zur Ausbildung des zweiten Gebiets 1032 (PBL) dieses in einer Aufsicht auf die Oberfläche S des Trägersubstrats 1010 vollständig im ersten Gebiet 1022 (NBL). Um dabei einen in der epitaktischen Schicht liegenden p-n-Übergang 1050 auszubilden, weisen der erste und der zweite Dotierstoff vorzugsweise unterschiedliche Diffusionseigenschaften im Trägersubstrat 1010 und/oder in der epitaktischen Schicht 1040 auf. Insbesondere kann der zweite Dotierstoff im zweiten Gebiet 1032 (PBL) wie gezeigt eine höhere Diffusions-Beweglichkeit (und damit Diffusionslänge) im Trägersubstrat 1010 und in der epitaktischen Schicht 1040 als der erste Dotierstoff im ersten Gebiet 1022 (NBL) aufweisen.

Zur Verstärkung der Diffusion kann nach dem Einbringen des ersten Dotierstoffs und/oder des zweiten Dotierstoffs eine Erwärmung des Trägersubstrats 1010 erfolgt. Weiterhin kann nach dem Aufwachsen der epitaktischen Schicht 1040 eine Erwärmung des Trägersubstrats 1010 zur Verstärkung der Dotierstoffdiffusion erfolgen. Ein Einbringen des ersten Dotierstoffs und/oder des zweiten Dotierstoffs kann beim vorgestellten Verfahren sowohl maskenlos oder über ein Maskenverfahren erfolgen. Bei dem gezeigten BCD-Wafer kann eine vollständige Überlagerung des ersten Gebiets 1022 (NBL) mit einem einzelnen zweiten Gebiet 1032 (PBL) angenommen werden. Herkömmlicherweise werden die ersten und zweiten Gebiete 1022 und 1032 jedoch räumlich getrennt voneinander ausgebildet. Insbesondere ist deren Abstand dabei im Allgemeinen mindestens so groß gewählt, dass auch nach dem Ausdiffundieren der einzelnen Dotierstoffe keine sich überlagernden Gebiete erzeugt werden.

Die unterhalb der schematischen Darstellung angegebene TCAD-Darstellung (engl. "Technology Computer-Aided Design, TCAD") zeigt die Dotierstoffverteilung innerhalb des kontaktierten BCD-Substrats 1110 zur Simulation einer entsprechenden integrierten Diodenstruktur. Aufgrund der in dieser Ausführungsform gezeigten Doppelstruktur mit einem oberen p-n-Übergang 1050 in der epitaktischen Schicht 1040 und einem unteren p-n-Übergang 1052 in dem Trägersubstrat 1010 ergibt sich in der gezeigten Seitenansicht eine effektive Einschnürung des im Bereich der p-n-Übergänge 1050 und 1052 eingeschlossenen n-Gebiets NBL durch die beiden dieses n-Gebiet NBL umgebenden p-Gebiete PBL. Beide p-n-Übergänge 1050 und 1052 können zur Bereitstellung voneinander unabhängiger SPADs mit einer zur Erzeugung eines Lawineneffekts geeigneten Dotierungsdichte und Feldstärkeverteilung ausgebildet werden.

Mittels entsprechender BCD-Substrate 1110 zur weiteren Verwendung in BCD-Technologien lassen sich somit besonders tiefliegende SPADs ("deepSPADs") erzeugen. Insbesondere bleibt oberhalb der bereitgestellten SPADs dabei noch genügend Bauraum zur Integration weiterer optoelektronischer Komponenten. Es kann daher insbesondere eine oberhalb der tiefliegenden SPAD ausgebildete Zener-avLED dazu genutzt, einen besonders kompakten, vertikal aufgebauten iQRNG zu realisieren, bei dem einzelne Photonen 1128 durch die Zener-avLED vorzugsweise in Richtung des oberen p-n-Übergangs 1050 emittiert werden und somit für eine Detektion durch eine unmittelbar unterhalb der Zener-avLED am oberen p-n-Übergang 1050 ausgebildeten SPAD als Einzelphotonendetektor bereitgestellt werden (siehe FIG. 7 mit zugehöriger Figurenbeschreibung).

Figur 7 zeigt eine schematische Darstellung einer beispielhaften ersten Ausführungsform eines beschriebenen iQRNG 1200. Insbesondere kann der oben angegebene Quantenzufallsgenerator einen solchen iQRNG 1200 umfassen. Der gezeigte integrierte QRNG 1200 umfasst eine Photonenquelle 1120 und einen Einzelphotonendetektor 1130, wobei die Photonenquelle 1120 und der Einzelphotonendetektor 1130 in vertikaler Richtung übereinander in einem gemeinsamen Substrat aus einem Halbleitermaterial angeordnet sind. Vorzugsweise handelt es sich bei der Photonenquelle 1120 um eine Einzelphotonenquelle (SPS), dazu eingerichtet, zeitgleich nur einzelne oder einige wenige Photonen 1128 bereitzustellen. Vorzugsweise handelt es sich bei der Photonenquelle 1120 um eine an einem Arbeitspunkt unterhalb oder nahe der Durchbruchspannung betriebene lichtemittierende Avalanche Zener-Diode (Zener-avLED). Vorzugsweise handelt es sich bei dem Einzelphotonendetektor 1130 um eine Einzelphotonen-Lawinendiode (SPAD).

Der iQRNG 1200 ist vorzugsweise in einem BCD-Substrat 1110 in BCD-Technologie ausgebildet. Vorzugsweise umfasst das BCD-Substrat 1110 ein Trägersubstrat 1010; und eine auf dem Trägersubstrat 1010 aufgewachsene epitaktische Schicht 1040, wobei zwischen dem Trägersubstrat 1010 und der epitaktischen Schicht 1040 durch eine Diffusion von in eine Oberfläche S des Trägersubstrats 1010 unterhalb der epitaktischen Schicht 1040 eingebrachten Dotierstoffen ein in der epitaktischen Schicht liegender tiefliegender p-n-Übergang 1050 erzeugt wurde (siehe FIG. 6). Vorzugsweise bildet der Einzelphotonendetektor 1130 in einem Bereich um den tiefliegenden p-n-Übergang 1050 ein Lawinengebiet aus und umfasst ein Absorptionsgebiet PW/HPW mit einer Hochvolt-p-Wanne HPW (engl. "high-voltage p-type well") und eine p-Wanne PW (engl. "p-type well") zur Umwandlung von Photonen in Elektronen-Lochpaare, wobei sich das Absorptionsgebiet PW/HPW unmittelbar an die den tiefliegenden p-n-Übergang 1050 ausbildenden Gebiete NBL und PBL anschließt. Die vollständig ausgeprägte Hochvolt-p-Wanne HPW ermöglicht dabei einen optimalen Anschluss des tiefliegenden p-n-Übergang 1050 von der Anode her.

Bevorzugt ist, dass der tiefliegende p-n-Übergang 1050 zumindest teilweise zwischen einer tiefliegenden n-Schicht NBL als Kathode 1132 und einer sich unmittelbar an die tiefliegende n-Schicht NBL anschließenden tiefliegenden p-Schicht PBL ausgebildet ist, das Absorptionsgebiet PW/HPW sich unmittelbar an die tiefliegende p-Schicht PBL anschließt und im Wesentlichen als p-Gebiet (optional ein intrinsisches Gebiet umfassend) ausgebildet ist, und eine als p+-Gebiet ausgebildete Anode 1134 sich unmittelbar an das Absorptionsgebiet PW/HPW anschließt.

Im gezeigten Ausführungsbeispiel sind die jeweiligen Anoden 1124 und 1134 der Photonenquelle 1120 und des Einzelphotonendetektors 1130 zusammengelegt. Diese können dann beispielsweise über eine gemeinsame zweite Metallisierung MET2 an der Oberfläche S des BCD-Substrats 1110 elektrisch kontaktiert werden. Durch eine gemeinsame und durchgehende zweite Metallisierung MET2 kann auch eine Abschattung zur Abschirmung des gesamten Bauraums darunter erreicht werden. Die gemeinsamen Anoden 1124, 1134 der Photonenquelle 1120 und des Einzelphotonendetektors 1130 sind einerseits über die die p-Wanne PW mit der Hochvolt-p-Wanne HPW und der tiefliegenden p-Schicht PBL zur Kontaktierung des ersten p-n-Übergangs 1050, und andererseits mit dem p-dotierter Bereich (engl. "p-type body") PBODY zur Kontaktierung des p-n-Übergangs 1121 der Photonenquelle 1120 verbunden. Die zugehörigen Kathoden 1122 und 1132 sind beispielhaft jeweils einzeln ausgeführt und können über eine erste zugehörige erste Metallisierung MET1 elektrisch kontaktiert werden und liegen bevorzugt auf dem Bezugspotenzial GND. Der beschriebene iQRNG kann als kreisförmige Struktur ausgebildet sein (entspricht einer räumlichen Rotation der gezeigten Darstellungsebene um eine gedachte zentrale Achse in vertikaler Richtung). Es sind jedoch auch andere Ausbildungen der gezeigten Struktur möglich.

Zur Spannungsversorgung kann die Kathode 1132 des Einzelphotonendetektors 1130 beispielsweise über einen Arbeitswiderstand R₂ mit einer vorzugsweise überwachten zweiten positiven Versorgungsspannung auf einer zweiten Versorgungspannungsleitung V_{ENT2} verbunden sein. Bei einer Detektion eines Photons, fließt ein elektrischer Strom durch den in Sperrrichtung gepolten p-n-Übergang 1050 des Einzelphotonendetektors 1130. Dadurch kommt es beispielsweise zu einem Spannungsabfall über den Arbeitswiderstand R₂ in Form eines typischerweise schnell ansteigenden und dann exponentiell abfallenden Spannungssignal 1405 am Ausgang der Entropiequelle (zur weiteren möglichen Verarbeitung wird auf die beispielhafte elektronische Schaltung eines Quantenzufallsgenerators 1400 nach FIG. 11 verwiesen). Beispielsweise kann ein Analog-zu-Digital-Wandler (engl. "Analog-to-Digital Converter, ADC") (1403 in FIG. 11) anschließend dieses Entropieausgangssignal auswerten. Der ADC (1403) kann auch Verstärker und/oder Filter zur Aufbereitung des Spannungssignals (1405) umfassen. Der Arbeitswiderstand R₂ begrenzt darüber hinaus den Strom durch den Einzelphotonendetektor 1130.

Die Kathode 1122 des Einzelphotonendetektors 1130 kann beispielsweise über einen ersten Arbeitswiderstand R₁ mit einer vorzugsweise überwachten ersten positiven Versorgungsspannung auf einer ersten Versorgungspannungsleitung V_{ENT1} verbunden sein. Der erste Arbeitswiderstand R₁ begrenzt den Strom durch die Photonenquelle 1120. Bei Emission eines Photons zeigt der Sperrstrom des in Sperrrichtung gepolten p-n-Übergangs 1121 der Photonenquelle 1120 typischerweise einen Spike-förmigen Anstieg. Dieser Sperrstromanstieg führt zu einem Spannungspuls über den ersten Arbeitswiderstand R₁. Dieser Spannungspuls kann ausgewertet werden. Beispielsweise kann der ADC (1403) mittels einer ADC-internen Korrelationsvorrichtung dazu eingerichtet sein, nur solche Pulse auf dem Spannungssignal 1405 am Ausgang der Entropiequelle auszuwerten, die mit einem Spannungspuls am ersten Arbeitswiderstand R₁, beispielsweise auf einem optionalen Korrelationssignal 1430 korrelieren. Nur solche Pulse auf dem Spannungssignal 1405 werden dann als Pulse des Einzelphotonendetektors 1130 gewertet, die mit einer Emission eines Photons durch die Photonenquelle 1120 korrelieren. Dies steigert die Qualität der Entropie der bereitgestellten Quantenzufallszahlen.

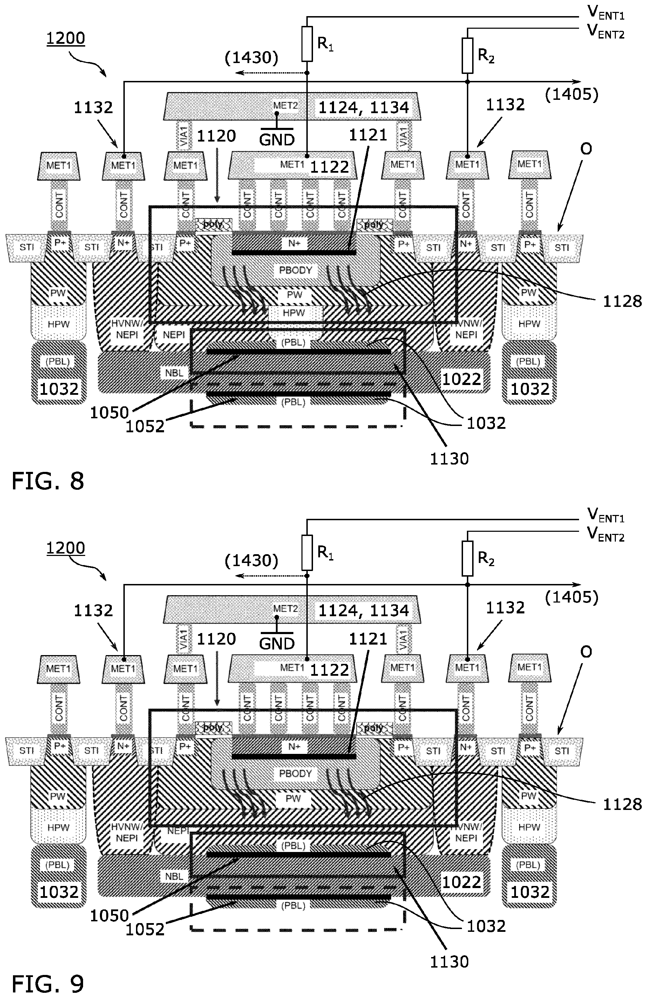

Figur 8 zeigt eine schematische Darstellung einer beispielhaften zweiten Ausführungsform eines beschriebenen iQRNG. Die gezeigte Ausführungsform entspricht weitgehend der in der FIG. 7 gezeigten ersten Ausführungsform. Die Bezugszeichen und deren jeweilige Zuordnung zu einzelnen Merkmalen gelten daher entsprechend. Im Vergleich zur FIG. 7 wurde die Hochvolt-p-Wanne HPW jedoch strukturell durch eine verjüngte Hochvolt-p-Wanne HPW und ein schwach n-dotiertes bzw. intrinsisches epitaktisches Gebiet NEPI ersetzt. Dabei bildet die Hochvolt-p-Wanne HPW des Absorptionsgebiets PW/HPW lediglich einen engen Kanal zwischen der auch in FIG. 5 gezeigten obenliegenden p-Wanne PW und der tiefliegenden p-Schicht PBL des tiefliegende p-n-Übergang 1050 aus. Die Umgebung des Kanals wird durch das schwach n-dotierte bzw. intrinsische epitaktische Gebiet NEPI definiert. Durch den Kanal kann wird der tiefliegenden p-n-Übergang 1050 ohne einem zusätzlichen Durchgriff/Punch durch das schwach n-dotierte bzw. intrinsisches epitaktisches Gebiet NEPI von der Anode her angeschlossen.

Figur 9 zeigt eine schematische Darstellung einer beispielhaften dritten Ausführungsform eines beschriebenen iQRNG. Die gezeigte Ausführungsform entspricht weitgehend der in der FIG. 8 gezeigten ersten Ausführungsform. Die Bezugszeichen und deren jeweilige Zuordnung zu einzelnen Merkmalen gelten daher entsprechend. Im Vergleich zur FIG. 7 wurde auf die kanalförmig ausgebildete Hochvolt-p-Wanne HPW im Absorptionsgebiet PW/HPW verzichtet und das schwach n-dotierte bzw. intrinsische epitaktische Gebiet NEPI erstreckt sich über den gesamten unteren Bereich. Insofern wurde im Vergleich zur FIG. 7 die Hochvolt-p-Wanne HPW strukturell durch ein schwach n-dotierte bzw. intrinsisches epitaktisches Gebiet NEPI ersetzt. Der tiefliegende p-n-Übergang 1050 wird somit erst nach einem zusätzlichen Durchgriff/Punch durch das schwach n-dotierte bzw. intrinsisches epitaktisches Gebiet NEPI von der Anode her angeschlossen, was eine Entkopplung von möglicherweise mehreren nebeneinander parallel angeordneten Zellen bewirkt.

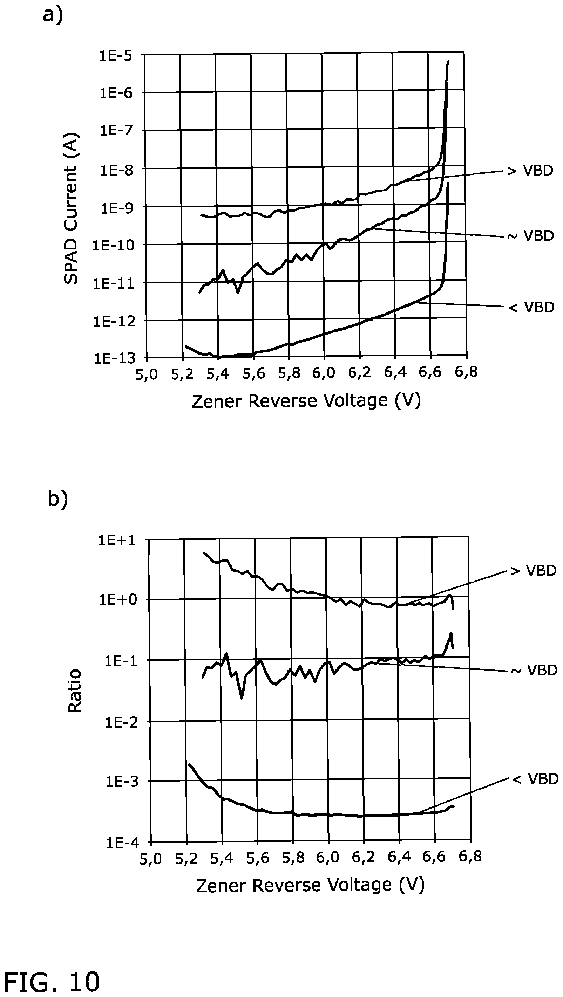

Figur 10 zeigt eine graphische Darstellung der Abhängigkeit des a) SPAD-Stroms und b) des Verhältnisses zwischen SPAD-Strom und Zener-Strom in Abhängigkeit von der Zener-Sperrspannung bei verschiedenen SPAD-Sperrspannungen (kleiner, gleich, größer der Durchbruchspannung) innerhalb eines beschriebenen iQRNGs. Die unter a) gezeigte Abhängigkeit zeigt dabei deutlich, dass der SPAD-Strom mit der Zener-Sperrspannung im Bereich von 5,6 V bis 6,6 V exponentiell ansteigt. Dies gilt für alle Betriebsmodi der SPAD, d. h. unterhalb dessen eigener Durchbruchspannung (< VBD, linearer Bereich), nahe der Durchbruchspannung (~ VBD, Avalanche-Bereich) sowie auch oberhalb der Durchbruchspannung (> VBD) und somit auch im Geiger-Betrieb.

Der unter b) gezeigte untere Kurvenverlauf (< VBD) zeigt, dass das gemessene Stromverhältnis zwischen dem SPAD-Strom und dem Zener-Strom für verschiedene Zener-Sperrspannungen im Bereich 5,8 bis 6,6 V etwa 1:4000 beträgt. Im Bereich der Durchbruchspannung (~ VBD) der SPAD steigt das Verhältnis auf Werte um 1:10. Dies ist im sog.

Multiplikationsfaktor der SPAD begründet, welcher im Bereich der Durchbruchspannung den linearen Bereich verlässt. Der obere Kurvenverlauf gibt schließlich das entsprechende Verhältnis bei der oberhalb der zugehörigen Durchbruchspannung (> VBD) betriebenen SPAD an (etwa 1:1). Dies bedeutet, dass bei einer oberhalb der zugehörigen Durchbruchspannung (> VBD) betriebenen SPAD der erzeugte Photostrom und der Zener-Strom der Zener-avLED in etwa gleich groß sind und ein deutliches Messsignal mittels der Kopplung von Photonen auf der SPAD gemessen werden kann.

Figur 11 zeigt eine schematische Darstellung einer beispielhaften elektronischen Schaltung eines Quantenzufallsgenerators 1400 zur Generierung und Ausgabe einer digitalen Zufallszahlenfolge. Bei der gezeigten Entropiequelle 1401 kann es sich insbesondere um eine Photonenquelle 1120 und einen Einzelphotonendetektor 1130 eines beschriebenen iQRNG 1200 handeln, wobei der iQRNG 1200 (bzw. dessen Entropiequelle) über eine erste Versorgungsspannungsleitung V_{ENT1} und eine zweite Versorgungsspannungsleitung V_{ENT2}, welche an einen Spannungswandler 1408 angeschlossen ist, gegenüber einem Bezugspotential auf einer Bezugspotentialleitung GND beispielsweise mit unterschiedlichen Versorgungsspannungen versorgt wird. Es ist zu beachten, dass ein allgemeiner (und insbesondere der hier beispielhaft gezeigte) Quantenzufallsgenerator 1400 in einigen Ausführungsformen einem erfindungsgemäßen iQRNG 1200, wie er als Halbleiterstruktur beispielsweise in den FIG. 7 bis 9 gezeigt ist, unter Hinzunahme weiter Schaltungskomponenten unmittelbar entsprechen kann. Insbesondere können eine Photonenquelle 1120 und einen Einzelphotonendetektor 1130 eines erfindungsgemäßen iQRNG 1200 zusammen als Entropiequelle 1401 des gezeigten Quantenzufallsgenerators 1400 angesehen werden, d. h. auch bei einem erfindungsgemäßen iQRNG 1200 kann die Kombination aus einer Photonenquelle 1120 und einem Einzelphotonendetektor 1130 als Entropiequelle bezeichnet werden. Ein von der Entropiequelle 1401 erzeugtes Spannungssignal 1405 wird in einem Analog-zu-Digital-Wandler (engl. "Analog-to-Digital Converter, ADC") 1403, welcher über eine Referenzspannungsleitung V_{REF} versorgt wird, zunächst digitalisiert und als digitales Ausgangssignal 1407 an eine Pulsverlängerungsschaltung 1406 übergeben. Die Versorgungsspannungsleitung V_{ENT} und die Referenzspannungsleitung V_{REF} werden über einen Spannungsmonitor 1413 überwacht, wobei sowohl der Spannungswandler 1408 als auch der Spannungsmonitor 1413 über eine positive Versorgungsspannungsleitung VDD gegenüber dem Bezugspotential auf der Bezugspotentialleitung GND mit Spannung versorgt werden. Der Spannungswandler 1408 ist mit dem Spannungsmonitor 1413 über eine Spannungswandlerleitung 1421 verbunden.

Bei der Pulsverlängerungsschaltung 1406 kann es sich insbesondere um eine monostabile Kippstufe (Monoflop, MF) handeln. Das Monoflop kann dazu genutzt werden, einen Puls auf der Leitung des digitalen Ausgangssignals 1407 des ADC 1403 in Abhängigkeit von einem bestimmten vorgegebenen Systemtakt, beispielsweise auf eine zeitliche Länge von mindestens einer Taktperiode des Systemtakts, zu verlängern.

Von der Pulsverlängerungsschaltung 1406 wird dann ein einsynchronisiertes Spannungssignal 1415, d. h. beispielsweise ein Puls mit einer bestimmten Mindestlänge, ausgegeben und an einen Zeit-zu-Pseudozufallszahl-Wandler (engl. "Time-to-Pseudo-Random-Number Converter, TPRC") 1404.3 übergeben. Dieser kann ein- oder mehrstufig zusammengesetzt sein. Beispielsweise kann der TPRC 1404.3 ein analoges Instrument, einen Zeit-zu-Analog-Wandler (engl. "Time-to-Analog Converter, TAC"), und/oder einen Analog-zu-Pseudozufallszahl-Wandler (engl. "Analog-to-Pseudo-Random-Number Converter, APRC") umfassen, die zusammen ebenfalls einen TPRC 1404.3 bereitstellen können. Der Pseudozufallszahlengenerator des TPRC 1404.3 kann ein rückgekoppeltes Schieberegister umfassen, dass je nach Konstruktion mit jedem Takt des Systemtakts seine Werte um eine Stelle nach links oder rechts verschiebt und in das freiwerdende Bit den Rückkoppelwert eines vorgegebenen Rückkoppelpolynoms zurückspeist. Bei dem Rückkoppelpolynom kann es sich bevorzugt um ein einfach-primitives Rückkoppelpolynom handeln. Der TPRC 1404.3 kann unmittelbar mit einem internen Datenbus 1419 verbunden sein. Das Ausgangssignal 1410 des TPRC 1404.3 kann weiterhin einer Entropieextraktion 1404.4 zugeführt werden.

Beginnend mit einem Startwert des Pseudozufallszahlengenerators (einem sogenannten Seed-Wert) kann hierzu jedem Takt des Systemtakts ab einer fallenden Flanke des einsynchronisierten Spannungssignals 1415 genau eine Pseudozufallszahl des Pseudozufallszahlengenerators bijektiv zugeordnet werden, d. h. aus dem Wert der Pseudozufallszahl kann dann auf die zeitliche Position des betreffenden Takts des Systemtaktes nach der fallenden Flanke des einsynchronisierten Spannungssignals 1415 geschlossen werden.

Anstatt eines üblichen Digitalzählers wie im Stand der Technik kann somit ein Pseudozufallszahlengenerator verwendet werden. Der Vorteil ist, dass selbst bei einer durch einen Angreifer erfolgreich durchgeführten Einprägung einer Störung in das einsynchronisierte Spannungssignal 1415 die Zufälligkeit des Quantenzufallsbits am Ausgang 1411 der Entropieextraktion 1404.4 nur marginal gestört wird, da der Angreifer das zugehörige Rückkoppelpolynom kennen müsste. Vorzugsweise kann dieses zufällig aus einer Vielzahl an Möglichkeiten ausgewählt werden. Gleiches gilt für den Seed-Wert des Pseudozufallszahlengenerators, welchen ein Angreifer dann ebenfalls ermitteln müsste. Ein weiterer Vorteil eines Pseudozufallszahlengenerators an Stelle eines einfachen Digitalzählers ist der geringere Flächenbedarf der Rückkoppellogik mittels eines einfach-primitiven Rückkoppelpolynoms gegenüber einem Binärzähler. Ist das linear rückgekoppelte Schieberegister des Pseudozufallszahlengenerators lang genug, so ist jedem Takt zwischen zwei Pulsen des von der Entropiequelle 1401 erzeugten Spannungssignals 1405 typischerweise eine eindeutige Pseudozufallszahl zugeordnet.

Die Entropieextraktion 1404.4 kann dazu genutzt werden, einen Fehler (d. h. einen nicht gewünschten Zustand) im Ausgangssignal 1410 des TPRC 1404.3 zu ermitteln. Hierzu kann die Entropieextraktion 1404.4 insbesondere zwei über einen Komparator miteinander vergleichbare linear rückgekoppelte Schieberegister aufweisen. Auch an dieser Stelle kann somit auf herkömmliche Binärzähler verzichtet werden. Eine Rückkopplung kann abhängig vom der Registertiefe ebenfalls über einfach-primitive Polynome als Rückkoppelpolynome erfolgen. Die Länge der linear rückgekoppelten Schieberegister kann dabei frei einstellbar sein. Lange Schieberegister weisen im Allgemeinen eine schlechtere Datenrate und eine verbesserte Zufallsstatistik auf. Kürzere Schiebregister erlauben demgegenüber zwar eine höhere Datenrate, zeigen jedoch eine schlechtere Zufallsverteilung. Die Verwendung von Schieberegistern an dieser Stelle hat den Vorteil, dass weniger Gatter als im Stand der Technik benötigt werden, die logische Tiefe der Schaltungen kleiner ist und somit die Taktrate höher sein kann. Dadurch wird die Wahrscheinlichkeit für das Vorkommen von zwei gleichen Zahlen geringer und die Zufallsbitrate wird höher.

Ein entsprechendes Verfahren zur Entropieextraktion kann vorsehen, dass zunächst zwei Werte des Ausgangssignals 1410 des TPRC 404.3 ermittelt und in Schieberegister der Entropieextraktion 1404.4 gespeichert werden. Sind zwei Werte im Schieberegister der Entropieextraktion 1404.4 gespeichert, kann die Entropieextraktion 1404.4 diese beiden Werte vergleichen. Die Werte in den Schieberegistern der Entropieextraktion 1404.4 umfassen somit einen ersten Wert und einen zweiten Wert, die beide der TPRC 1404.3 ermittelt hat. Anschließend kann die Entropieextraktion 1404.4 die beiden Werte bewerten. Ist der erste Wert kleiner als der zweite Wert und die Differenz zwischen dem ersten Wert und dem zweiten Wert größer als eine Mindestdifferenz ε, so kann die Entropieextraktion 1404.4 den Wert ihres Ausgang 1411, auf einen ersten logischen Wert setzen. Ist der erste Wert größer als der zweite Wert und die Differenz zwischen dem ersten Wert und dem zweiten Wert größer als die Mindestdifferent ε, so kann die Entropieextraktion 1404.4 ihren Ausgang 1411, auf einen zweiten logischen Wert, der vom ersten logischen Wert verschieden ist, setzen. Ist die Differenz zwischen dem ersten Wert und dem zweiten Wert kleiner als die Mindestdifferenz ε, so kann die Entropieextraktion 1404.4 den ersten Wert und den zweiten Wert verwerfen.

Bevorzugt veranlasst die Entropieextraktion 1404.4 einen sogenannten Watchdog 1404.5 in einem solchen Fall einen Fehlerzähler um eine erste Fehlerzählerschrittweite zu erhöhen. Die erste Fehlerzählerschrittweite kann negativ sein. Umgekehrt kann die Entropieextraktion 1404.4 den Fehlerzähler des Watchdogs 1404.5 um eine zweite Fehlerzählerschrittweite erniedrigen, wenn die Differenz zwischen dem ersten Wert und dem zweiten Wert größer als die Mindestdifferenz ε ist. Die zweite Fehlerzählerschrittweite kann gleich der ersten Fehlerzählerschrittweite sein.

Der Watchdog 1404.5 ist weiterhin mit dem interne Datenbus 1419 verbunden. Zusätzlich kann der Watchdog 1404.5 über ein oder mehrere, vorzugsweise digitale Ein-Ausgabe-Signalleitungen 1414 mit dem Spannungsmonitor 1413 verbunden sein. Bevorzugt überwacht der Watchdog 1404.5 die Spannungswerte, die der Spannungsmonitor 1413 ermittelt. Es hat sich bewährt, wenn der Spannungsmonitor 1413 nicht nur die Spannungen im Quantenzufallszahlengenerator 1400 ermittelt und überwacht, sondern auch andere Spannungen innerhalb der jeweiligen Anwendungsschaltung. Bei dem Spannungsmonitor 1413 kann es sich beispielsweise um einen ADC handeln.

Die eigentliche Aufgabe des Watchdog 1404.5 ist jedoch eine Überwachung der Quantenzufallszahl RN am Ausgang 1411 der Entropieextraktion 1404.4. Der Watchdog 1404.5 kann dabei vorzugsweise zumindest drei definierte Fehlerfälle erfassen. Der Watchdog 1404.5 kann valide Quantenzufallsbits 1411 unter Erzeugung eines Seed-Werts S 1412 an eines optionales weiteres linear rückgekoppeltes Schieberegister als Backup-Pseudo-Zufallszahlengeneratoren (engl. "Pseudo Random Number Generator, PRNG") 1404.6 weitergeben. Vorzugsweise verhindert der Watchdog 1404.5 die Verwendung der validen Quantenzufallsbits durch eine Finite-State-Machine 1404.8. Sofern ein Fehler auftritt, kann der Watchdog 1404.5 bestimmte Fehlerbits zur weiteren Auswertung setzen.

Hat der Watchdog 1404.5 beispielswiese einen Fehler des Quantenzufallsgenerators 1400 detektiert, so kann er vorzugsweise den Quantenzufallszahlengenerator 1400 in einen Notlaufzustand versetzen. Hierzu setzt der Watchdog 1404.5 vorzugsweise ein Selektionssignal 1416 eines der Zufallszahlenerzeugung nachgeordneten Signalmultiplexers 1404.7, sodass der Signalmultiplexer 1404.7 anstatt der Zufallszahlen RN am Ausgang 1411 der Entropieextraktion 1404.4 die Pseudozufallszahl PRN des optionalen PRNG 1404.6 in Form eines Stroms von Pseudozufallsbits über eine Pseudozufallssignalleitung 1417 als Ersatz für die zumindest potenziell fehlerhafte Zufallszahl RN des Ausgangs 1411 der Entropieextraktion 1404.4 an den Eingang der Finite-State-Machine 1404.8 legt.

Das optionale weitere linear rückgekoppelte Schieberegister des PRNG 1404.6 kann dazu ausgebildet sein, Pseudozufallszahlen PRN zu generieren. Der Seed-Wert S 1412 weist bevorzugt die letzten gerade noch gültigen Quantenzufallsbits des Ausgangs 1411 der Entropieextraktion 1404.4 auf. Der Watchdog 1404.5 legt dann bevorzugt diese letzten gültigen Quantenzufallsbits 1411 an den Eingang des optionalen PRNG 1404.6 an. Der Seed-Wert S kann somit als zufälliger sicherer Startwert für ein Generatorpolynom der Rückkopplung des optionalen weiteren linear rückgekoppelten Schieberegisters des PRNG 1404.6 für die Generierung der Pseudozufallszahl PRN und deren Signalisierung über die Pseudozufallssignalleitung 1417 genutzt werden. Das Generatorpolynom sowie der Grad des Generatorpolynoms sind dabei bevorzugt frei wählbar. Durch den optionalen Backup-Pseudo-Zufallszahlengenerator kann im Fehlerfall zumindest übergangsweise die Bereitstellung von sicheren Zufallszahlen ermöglicht werden.

Die Finite-State-Machine 1404.8 hat die Aufgabe, die Zufallszahl RN bzw. die Pseudozufallszahl PRN am Ausgang des Signalmultiplexers 1404.7 entgegenzunehmen und entsprechende Quantenzufallsdatenwörter 1418 über eine Pseudozufallssignalleitung 1417 in einen flüchtigen Speicher (RAM) bzw. einen FIFO-Speicher (First In - First Out) 1404.9 zu schreiben. Ist der Schreibvorgang erfolgreich, kann die Finite-State-Machine 1404.8 ein Finish-Flag 1404.10 über den internen Datenbus 1419 setzen. Daraufhin kann ein Prozessor beispielsweise auf den flüchtigen Speicher (RAM) bzw. einen FIFO-Speicher (First In - First Out) 1404.9 zugreifen und die Zufallszahl auslesen und beispielsweise zur Verschlüsselung benutzen.

Der Quantenzufallsgenerator 1400 kann weiterhin einen Temperatursensor oder andere Sensoren umfassen kann, mit denen der Watchdog 1404.5 oder ein anderer Vorrichtungsteil des Quantenzufallsgenerators 1400, ggf. mittels des ADC 1403 oder eines anderen Analog-zu-Digital-Wandlers und/oder anderer Vorrichtungsteile wie Sensorverstärker und/oder Filter, physikalische Parameter der Umgebung des Quantenzufallsgenerators 1400 wie beispielsweise die Temperatur überwacht und Gegenmaßnahmen einleitet, wenn ein Wert eines solchen physikalischen Parameters außerhalb eines vorbestimmten Wertebereichs liegt. Solche Gegenmaßnahmen können Signalisierungen an andere Vorrichtungen, beispielsweise über den internen Datenbus 1419 oder ein Notlaufbetrieb, z. B. unter Nutzung des PRGNG 1404.6 und des Multiplexers 1404.7 und/oder das Ändern interner Betriebsparameter, wie die Spannungspegel der interner Versorgungsspannungen, z. B. mittels des Spannungswandlers 1408 und/oder das Abschalten der Zufallszahlengenerierung etc. sein. Hierdurch werden Side-Channels zur Beeinflussung des Quantenzufallsgenerators 1400 geschlossen.

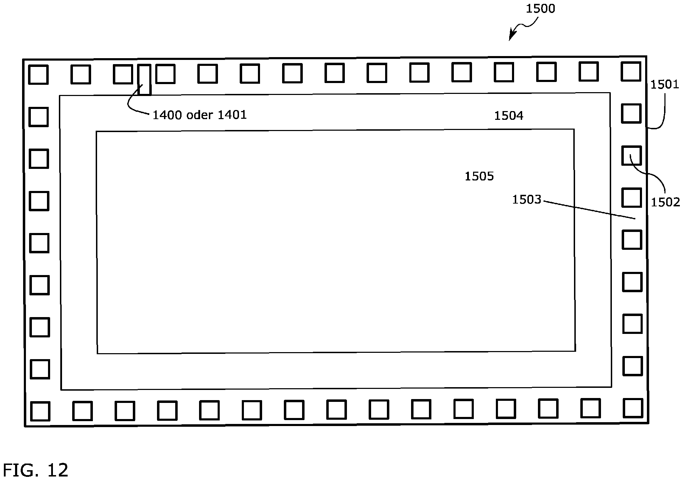

Figur 12 zeigt eine schematische Darstellung eines beispielhaften Layouts einer integrierten elektronischen Schaltung 1500 mit einem beschriebenen iQRNG 1200 im Pad-Rahmen 1503 in der Aufsicht. Die integrierte elektronische Schaltung 1500, beispielsweise ein Mikrocontroller, weist einen inneren Bereich 1505 auf, in dem sich die wesentlichen Unterschaltkreise der integrierten elektronischen Schaltung 1500 befinden. Typischerweise ist der innere Bereich 1505 von einem Verdrahtungsbereich 1504 umgeben, in dem vor allem Versorgungsspannungsleitungen, Datenbusleitungen und andere Leitungen geführt werden können.

Der Verdrahtungsbereich 1504 und der innere Bereich 1505 der integrierten elektronischen Schaltung 1500 sind typischerweise von dem Pad-Rahmen 1503 (auch als Pad-Rand bezeichnet) umgeben, der die Anschluss-Pads 1502 (Anschlussflächen) für die elektrischen Bondverbindungen oder anderen elektrischen Anschlussverbindungen umfasst.

Vorzugsweise kann ein beschriebener iQRNG 1200 bzw. ein entsprechender Quantenzufallsgenerator 1400, wie er beispielsweise in der Figur 11 gezeigt ist, ganz oder zumindest in wesentlichen Teilen im Pad-Rahmen 1503 platziert werden, da die Lücken zwischen den einzelnen Anschluss-Pads 1502 oft nicht mit elektronischen Schaltungsteilen gefüllt sind. Diese Lücken müssen bei der Herstellung der integrierten elektronischen Schaltung 1500 jedoch dennoch mitprozessiert werden und verursachen daher unnötige Herstellungskosten. Eine Platzierung von beschriebenen iQRNG 1200 bzw. entsprechenden Quantenzufallsgeneratoren 1400 ganz oder zumindest in wesentlichen Teilen im Pad-Rahmen 1503 reduziert daher die Zusatzkosten für deren Bereitstellung signifikant.

Insbesondere können bevorzugt zumindest die Photonenquelle 1120 und der Einzelphotonendetektor 1130 (Entropiequelle 1401) im Pad-Rahmen 1503 zwischen zwei Anschluss-Pads 1502 platziert werden. Weiterhin können ein ADC 1403, ein Spannungswandler 1408 zur Energieversorgung der Entropiequelle 1403, ein Pulsverlängerungsschaltung 1406 und/oder Analogteile eines beschriebenen Quantenzufallsgenerators 1400 (z. B. ein Verstärker) ebenfalls im Pad-Rahmen 1503 zwischen zwei Anschluss-Pads 1502 platziert werden.

### Bezugszeichenliste (auszugsweise)

- 1010: Trägersubstrat
- 1022: erstes Gebiet (z. B. NBL)
- 1032: zweites Gebiet (z. B. PBL)
- 1040: epitaktische Schicht
- 1050: erster p-n-Übergang (z. B. oberer p-n-Übergang einer Doppelstruktur)
- 1052: zweiter p-n-Übergang (z. B. unterer p-n-Übergang einer Doppelstruktur)
- 1110: Substrat
- 1120: Photonenquelle (z. B. Einzelphotonenquelle, SPS)
- 1122: Kathode (n⁺, Photonenquelle)
- 1124: Anode (p⁺, Photonenquelle)
- 1128: Photonen
- 1130: Einzelphotonendetektor (z. B. Einzelphotonen-Lawinendiode, SPAD)
- 1132: Kathode (n⁺, Einzelphotonendetektor)
- 1134: Anode (p⁺, Einzelphotonendetektor)
- 1150: lichtblockierende Schicht (engl. "light blocking layer")
- 1152: Mittel zur elektronischen Erfassung
- 1154: Mittel zur elektronischen Nachbearbeitung
- 1200: iQRNG
- 1400: Quantenzufallsgenerator (z. B auf einem iQRNG basierend)
- 1401: Entropiequelle (z. B. iQRNG)
- 1403: Analog-zu-Digital-Wandler (engl. "Analog-to-Digital Converter, ADC")
- 1404.3: Zeit-zu-Pseudozufallszahl-Wandler (engl. "Time-to-Pseudo-Random-Number Converter, TPRC")
- 1404.4: Entropieextraktion
- 1404.5: Watchdog
- 1404.6: Pseudo-Zufallszahlengenerator (engl. "Pseudo-Random-Number-Generator, PRNG", z. B. linear rückgekoppeltes Schieberegister)
- 1404.7: Signal-Multiplexer
- 1404.8: Finite-State-Machine (FSM)
- 1404.9: flüchtiger Speicher (RAM) / FIFO-Speicher (First In - First Out)
- 1404.10: Finish-Flag
- 1405: Spannungssignal (Entropiequelle)
- 1406: Pulsverlängerungsschaltung (z. B. Monoflop, MF)
- 1407: Ausgangssignal (ADC)
- 1408: Spannungswandler
- 1410: Ausgangssignal (TPRC)
- 1411: Ausgang (Entropieextraktion)
- 1412: Seed-Wert S
- 1413: Spannungsmonitor
- 1414: digitale Ein-Ausgabe-Signalleitung(en)
- 1415: einsynchronisiertes Spannungssignal (z. B. Puls mit einer Mindestlänge)
- 1416: Selektionssignal
- 1417: Pseudozufallssignalleitung
- 1418: Quantenzufallsdatenwörter
- 1419: interner Datenbus
- 1420: Interrupt-Signal
- 1421: Spannungswandlerleitung
- 1430: Korrelationssignal (optional)

- 1500: elektronische Schaltung (engl. "Integrated Circuit, IC")
- 1501: Halbleiter-Die
- 1502: Anschluss-Pads (Anschlussflächen)
- 1503: Pad-Rahmen
- 1504: Verdrahtungsbereich
- 1505: innerer Bereich

- NBL: tiefliegende n-Schicht (engl. "n-type buried layer")
- PBL: tiefliegende p-Schicht (engl. "p-type buried layer")
- H(V)PW: Hochvolt-p-Wanne (engl. "high-voltage p-type well")
- H(V)NW: Hochvolt-n-Wanne (engl. "high-voltage n-type well")
- PW: p-Wanne (engl. "p-type well")
- PBODY: p-dotierter Bereich (engl. "p-type body")
- NEPI: schwach n-dotiertes bzw. (annähernd) intrinsisches epitaktisches Gebiet
- MET1, MET2: Metallisierung
- CONT: Kontakt
- STI: Isolationsgebiet (engl. "shallow trench isolation")
- poly: Polysilizium-Schicht
- P⁺: p⁺-Gebiet
- N⁺: n⁺-Gebiet

- VDD: positive Versorgungsspannungsleitung
- GND: Bezugspotentialleitung
- V_{ENT1}: erste Versorgungsspannungsleitung (Entropiequelle)
- V_{ENT2}: zweite Versorgungsspannungsleitung (Entropiequelle)
- V_{REF}: Referenzspannungsleitung (ADC)
- RN: Zufallszahl (z. B. 1-bit Zufallszahl)
- PRN: Pseudozufallszahl

- S: Oberfläche (Trägersubstrat, z. B. eines BCD-Substrats)
- O: Oberfläche (Substrat, z. B. ein BCD-Substrat)
- R: radiale Symmetrieachse

## Patentansprüche

1. System zum sicheren Aktualisieren eines ausführbaren Codes, das Folgende umfassend:
ein erstes Speicherelement zum Speichern einer Codeaktualisierung;
ein zweites Speicherelement zum Speichern des ausführbaren Codes;
einen Quantenzufallsgenerator; und
eine erste Verarbeitungseinrichtung zur Authentifizierung und Validierung der Codeaktualisierung, wobei die erste Verarbeitungseinrichtung mit dem zweiten Speicherelement verbunden ist;
**dadurch gekennzeichnet, dass**
der Quantenzufallsgenerator eine Entropiequelle umfasst,
die Entropiequelle monolithisch in einem Halbleitersubstrat mit einer Oberfläche ausgeführt ist,
die Entropiequelle eine Photonenquelle umfasst, die dazu eingerichtet ist, bei Bestromung Photonen auszusenden,
die Entropiequelle einen Einzelphotonendetektor umfasst, der dazu eingerichtet ist, die Photonen der Photonenquelle zu detektieren und ein Entropiequellenausgangssignal zu erzeugen,
die Photonenquelle zwischen der Oberfläche des Halbleitersubstrats und dem Einzelphotonendetektor angeordnet ist oder der Einzelphotonendetektor zwischen der Oberfläche des Halbleitersubstrats und der Photonenquelle angeordnet ist,
die Photonenquelle und der Einzelphotonendetektor der monolithischen Entropiequelle vertikal übereinander angeordnet sind, und
der Quantenzufallsgenerator Mittel zur Erzeugung einer oder mehrerer Quantenzufallszahlen in Abhängigkeit von dem Entropiequellenausgangssignal aufweist.

2. System nach Anspruch 1, wobei der ausführbare Code ein Basic Input and Output System (BIOS) und/oder heruntergeladenen Programmcode umfasst.

3. System nach Anspruch 1 oder 2, wobei das zweite Speicherelement eine modifizierbare nichtflüchtige Speichervorrichtung umfasst.

4. System nach einem der vorhergehenden Ansprüche, wobei das erste Verarbeitungsmittel mindestens ein digitales Zertifikat zur Authentifizierung der Codeaktualisierung und/oder eine digitale Signatur zur Validierung der Codeaktualisierung verwendet.

5. System nach einem der vorhergehenden Ansprüche, wobei die Authentifizierung eine Feststellung umfasst, dass die Aktualisierungsinformationen von einer vorgegebenen Quelle stammen.

6. System nach Anspruch 5, wobei die vorgegebene Quelle einen ausgewählten BIOS-Anbieter und/oder Software-Anbieter umfasst.

7. System nach einem der vorhergehenden Ansprüche, wobei das erste Verarbeitungsmittel den ausführbaren Code durch die Codeaktualisierung ersetzt, wenn die Codeaktualisierung authentifiziert und validiert wurde.

8. System nach einem der vorhergehenden Ansprüche, wobei die Codeaktualisierung verschlüsselt ist und zur Bereitstellung des ausführbaren Codes entschlüsselt wird.

9. System nach einem der vorhergehenden Ansprüche, wobei die erste Verarbeitungseinrichtung dazu eingerichtet ist, zu bestimmen, ob die Codeaktualisierung in das erste Speicherelement geladen werden soll.

10. System nach eine der vorhergehenden Ansprüche, wobei die erste Verarbeitungseinrichtung einen Sicherheitsprozessor umfasst.

11. System nach eine der vorhergehenden Ansprüche, wobei die erste Verarbeitungseinrichtung auf einer herausnehmbaren Karte angeordnet ist.

12. System nach eine der vorhergehenden Ansprüche, weiterhin umfassend einen Host-Prozessor, der mit der ersten Verarbeitungseinrichtung kommuniziert, um den ausführbaren Code auszuführen.

13. System nach einem der vorhergehenden Ansprüche, weiterhin umfassend eine zweite Verarbeitungseinrichtung, die mit der ersten Verarbeitungseinrichtung kommuniziert, um den ausführbaren Code auszuführen.

14. Verfahren zum sicheren Aktualisieren eines ausführbaren Codes, wobei das Verfahren umfasst:
Bereitstellung einer Vorrichtung nach einem der vorhergehenden Ansprüche;
Konfigurieren des ersten Speicherelements zur Aufnahme mindestens eines Zertifikats;
Authentifizierung der Code-Aktualisierung auf der Grundlage des mindestens einen digitalen Zertifikats durch die erste Verarbeitungseinrichtung; und
Aktualisierung des ausführbaren Codes mit der Code-Aktualisierung, wenn die Code-Aktualisierung authentifiziert ist.

15. Verfahren nach Anspruch 14, wobei das Verfahren vor der Aktualisierung ferner einen Schritt der Validierung der Codeaktualisierung umfasst.
